(19) Europäisches Patentamt
European Patent Office
Office européen des brevets

(11) **EP 4 123 592 A2**

(12) **EUROPEAN PATENT APPLICATION**

(43) Date of publication:
**25.01.2023 Bulletin 2023/04**

(21) Application number: **22204658.3**

(22) Date of filing: **31.10.2022**

(51) International Patent Classification (IPC):
**G06V 10/62** (2022.01)   **G06V 10/80** (2022.01)
**G06V 10/82** (2022.01)   **G06V 20/52** (2022.01)
**G06V 40/20** (2022.01)

(52) Cooperative Patent Classification (CPC):
**G06V 10/82; G06V 10/62; G06V 10/806;**
**G06V 20/52; G06V 40/20**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **29.10.2021  CN 202111272807**

(71) Applicant: **Beijing Baidu Netcom**
**Science Technology Co., Ltd.**
**Beijing 100085 (CN)**

(72) Inventors:
• ZHOU, Desen
  **Beijing 100085 (CN)**
• WANG, Jian
  **Beijing 100085 (CN)**
• SUN, Hao
  **Beijing 100085 (CN)**

(74) Representative: **von Tietzen und Hennig, Nikolaus**
**Lorenz Seidler Gossel**
**Rechtsanwälte Patentanwälte**
**Partnerschaft mbB**
**Widenmayerstraße 23**
**80538 München (DE)**

(54) **HUMAN-OBJECT INTERACTION DETECTION METHOD, NEURAL NETWORK AND TRAINING METHOD THEREFOR, DEVICE, AND MEDIUM**

(57)    The present disclosure provides a human-object interaction detection method, a neural network and a training method therefor, a device, and a medium, and relates to the field of artificial intelligence, and specifically to computer vision technologies and deep learning technologies. The method includes: extracting a plurality of first target features and one or more first motion features from an image feature of an image to be detected; fusing each first target feature and some of the first motion features to obtain enhanced first target features; fusing each first motion feature and some of the first target features to obtain enhanced first motion features; processing the enhanced first target features to obtain target information of a plurality of targets including human targets and object targets; processing the enhanced first motion features to obtain motion information of one or more motions, where each motion is associated with one human target and one object target; and matching the plurality of targets with the one or more motions to obtain a human-object interaction detection result.

200

Fig. 2

## Description

### TECHNICAL FIELD

The present disclosure relates to the field of artificial intelligence, specifically to computer vision technologies and deep learning technologies, and in particular to a human-object interaction detection method, a method for training a neural network for human-object interaction detection, a neural network for human-object interaction detection, an electronic device, a computer-readable storage medium, and a computer program product.

### BACKGROUND

Artificial intelligence is a subject on making a computer simulate some thinking processes and intelligent behaviors (such as learning, reasoning, thinking, and planning) of a human, and involves both hardware-level technologies and software-level technologies. Artificial intelligence hardware technologies generally include technologies such as sensors, dedicated artificial intelligence chips, cloud computing, distributed storage, and big data processing. Artificial intelligence software technologies mainly include the following several general directions: computer vision technologies, speech recognition technologies, natural language processing technologies, machine learning/deep learning, big data processing technologies, and knowledge graph technologies.

In an image human-object interaction detection task, it is required to simultaneously detect a human, an object, and an interaction between the two, pair a human and an object that have an interaction in an image, and output a triplet <human, object, motion>. In the task, it is required to perform target detection and simultaneously classify human motions, which is very challenging when objects and humans in the image crowd. Human-object interaction detection can be applied to the fields of video monitoring and the like to monitor human behaviors.

The methods described in this section are not necessarily methods that have been previously conceived or employed. It should not be assumed that any of the methods described in this section is considered to be the prior art just because they are included in this section, unless otherwise indicated expressly. Similarly, the problem mentioned in this section should not be considered to be universally recognized in any prior art, unless otherwise indicated expressly.

### SUMMARY

The present disclosure provides a human-object interaction detection method, a training method for a neural network for human-object interaction detection, a neural network for human-object interaction detection, an electronic device, a computer-readable storage medium, and a computer program product.

According to an aspect of the present disclosure, there is provided a computer-implemented human-object interaction detection method, including: obtaining an image feature of an image to be detected; performing first target feature extraction on the image feature to obtain a plurality of first target features; performing first motion feature extraction on the image feature to obtain one or more first motion features; for each first target feature of the plurality of first target features, fusing the first target feature and at least some of the one or more first motion features to obtain a plurality of enhanced first target features; for each first motion feature of the one or more first motion features, fusing the first motion feature and at least some of the plurality of first target features to obtain one or more enhanced first motion features; processing the plurality of enhanced first target features to obtain target information of a plurality of targets in the image to be detected, where the plurality of targets include one or more human targets and one or more object targets; processing the one or more enhanced first motion features to obtain motion information of one or more motions in the image to be detected, where each motion of the one or more motions is associated with one of the one or more human targets, and one of the one or more object targets; and matching the plurality of targets with the one or more motions to obtain a human-object interaction detection result.

According to another aspect of the present disclosure, there is provided a computer-implemented method for training a neural network for human-object interaction detection. The neural network includes an image feature extraction sub-network, a first target feature extraction sub-network, a first motion feature extraction sub-network, a first target feature enhancement sub-network, a first motion feature enhancement sub-network, a target detection sub-network, a motion recognition sub-network, and a human-object interaction detection sub-network. The training method includes: obtaining a sample image and a ground truth human-object interaction label of the sample image; inputting the sample image to the image feature extraction sub-network to obtain a sample image feature; inputting the sample image feature to the first target feature extraction sub-network to obtain a plurality of first target features; inputting the sample image feature to the first motion feature extraction sub-network to obtain one or more first motion features; inputting the plurality of first target features and the one or more first motion features to the first target feature enhancement sub-network, where the first target feature enhancement sub-network is configured to: for each first target feature of the plurality of first target features, fuse the first target feature and at least some of the one or more first motion features to obtain a plurality of enhanced first target features; inputting the plurality of first target features and the one or more first motion features to the first motion feature enhancement sub-network, where the first motion feature enhancement sub-network is configured to: for each first motion feature of the one or more first motion features, fuse the first motion feature and at least some of the plurality of first target features to obtain one or more enhanced first motion features; inputting the plurality of enhanced first target features to the target detection sub-network, where the target detection sub-network is configured to receive the plurality of enhanced first target features to output target information of a plurality of predicted targets in the sample image, where the plurality of predicted targets include one or more predicted human targets and one or more predicted object targets; inputting the one or more enhanced first motion features to the motion recognition sub-network, where the motion recognition sub-network is configured to receive the one or more enhanced first motion features to output motion information of one or more predicted motions in the sample image, where each predicted motion of the one or more predicted motions is associated with one of the one or more predicted human targets, and one of the one or more predicted object targets; inputting the plurality of predicted targets and the one or more predicted motions to the human-object interaction detection sub-network to obtain a predicted human-object interaction label; calculating a loss value based on the predicted human-object interaction label and the ground truth human-object interaction label; and adjusting a parameter of the neural network based on the loss value.

According to another aspect of the present disclosure, there is provided a neural network for human-object interaction detection, the neural network including: an image feature extraction sub-network configured to receive an image to be detected to output an image feature of the image to be detected; a first target feature extraction sub-network configured to receive the image feature to output a plurality of first target features; a first motion feature extraction sub-network configured to receive the image feature to output one or more first motion features; a first target feature enhancement sub-network configured to: for each first target feature of the plurality of received first target features, fuse the first target feature and at least some of the one or more received first motion features to output a plurality of enhanced first target features; a first motion feature enhancement sub-network configured to: for each first motion feature of the one or more received first motion features, fuse the first motion feature and at least some of the plurality of received first target features to output one or more enhanced first motion features; a target detection sub-network configured to receive the plurality of enhanced first target features to output target information of a plurality of targets in the image to be detected, where the plurality of targets include one or more human targets and one or more object targets; a motion recognition sub-network configured to receive the one or more enhanced first motion features to output motion information of one or more motions in the image to be detected, where each motion of the one or more motions is associated with one of the one or more human targets, and one of the one or more object targets; and a human-object interaction detection sub-network configured to match the plurality of received targets with the one or more motions to output a human-object interaction detection result.

According to another aspect of the present disclosure, there is provided a non-transitory computer-readable storage medium storing computer instructions, where the computer instructions are used to cause a computer to perform the method described above.

According to another aspect of the present disclosure, there is provided a computer program product, including a computer program, where when the computer program is executed by a processor, the method described above is implemented.

According to one or more embodiments of the present disclosure, corresponding motion information is fused into each target feature, and corresponding human information and object information are fused into each motion feature, such that when target detection is performed based on the target feature, reference can be made to the corresponding motion information, and when motion recognition is performed based on the motion feature, reference can be made to the corresponding human information and object information, thereby enhancing an interactivity between a target detection module and a motion recognition module, greatly utilizing multi-task potential, improving the accuracy of output results of the two modules, and further obtaining a more accurate human-object interaction detection result. The method may be used in a complex scenario, and is of great help to fine-grained motions, and the overall solution has a strong generalization capability.

It should be understood that the content described in this section is not intended to identify critical or important features of the embodiments of the present disclosure, and is not used to limit the scope of the present disclosure. Other features of the present disclosure will be easily understood through the following description.

## BRIEF DESCRIPTION OF THE DRAWINGS

The accompanying drawings exemplarily show embodiments and form a part of the specification, and are used to explain exemplary implementations of the embodiments together with a written description of the specification. The embodiments shown are merely for illustrative purposes and do not limit the scope of the claims. Throughout the accompanying drawings, the same reference numerals denote similar but not necessarily same elements.

FIG. 1 is a schematic diagram of an exemplary system in which various methods described herein can be implemented according to an embodiment of the present disclosure;
FIG. 2 is a flowchart of a human-object interaction detection method according to an exemplary embodiment of the present disclosure;

FIG. 3 is a flowchart of a human-object interaction detection method according to an exemplary embodiment of the present disclosure;

FIG. 4 is a flowchart of fusing a first motion feature and at least some of first target features according to an exemplary embodiment of the present disclosure;

FIG. 5 is a flowchart of fusing a first target feature and at least some of first motion features according to an exemplary embodiment of the present disclosure;

FIG. 6 is a flowchart of a human-object interaction detection method according to an exemplary embodiment of the present disclosure;

FIG. 7 is a flowchart of a training method for a neural network for human-object interaction detection according to an exemplary embodiment of the present disclosure;

FIG. 8 is a flowchart of a training method for a neural network for human-object interaction detection according to an exemplary embodiment of the present disclosure;

FIG. 9 is a flowchart of a training method for a neural network for human-object interaction detection according to an exemplary embodiment of the present disclosure;

FIG. 10 is a structural block diagram of a neural network for human-object interaction detection according to an exemplary embodiment of the present disclosure;

FIG. 11 is a structural block diagram of a neural network for human-object interaction detection according to an exemplary embodiment of the present disclosure;

FIG. 12 is a structural block diagram of a neural network for human-object interaction detection according to an exemplary embodiment of the present disclosure; and

FIG. 13 is a structural block diagram of an exemplary electronic device that can be used to implement an embodiment of the present disclosure.

## DETAILED DESCRIPTION

Exemplary embodiments of the present disclosure are described below with reference to the accompanying drawings, where various details of the embodiments of the present disclosure are included for a better understanding, and should be considered as merely exemplary. Therefore, those of ordinary skill in the art should be aware that various changes and modifications can be made to the embodiments described herein, without departing from the scope of the present disclosure. Likewise, for clarity and conciseness, the description of well-known functions and structures is omitted in the following description.

In the present disclosure, unless otherwise stated, the terms "first", "second", etc., used to describe various elements are not intended to limit the positional, temporal or importance relationship of these elements, but rather only to distinguish one component from another. In some examples, the first element and the second element may refer to the same instance of the element, and in some cases, based on contextual descriptions, the first element and the second element may also refer to different instances.

The terms used in the description of the various examples in the present disclosure are merely for the purpose of describing particular examples, and are not intended to be limiting. If the number of elements is not specifically defined, there may be one or more elements, unless otherwise expressly indicated in the context. Moreover, the term "and/or" used in the present disclosure encompasses any of and all possible combinations of listed items.

In the related art, according to a human-object interaction detection method, a triplet is directly output using a one-stage method, according to another human-object interaction detection method, target detection and motion recognition are separately performed, and an obtained target is matched with an obtained motion. However, the former method has a poor interpretability, and it is difficult to obtain an accurate result, and the latter method lacks interaction between two subtasks of the target detection and the motion recognition, and it is easy to fall into a local optimal solution.

To solve the above problems, in the present disclosure, corresponding motion information is fused into each target feature, and corresponding human information and object information are fused into each motion feature, such that when target detection is performed based on the target feature, reference can be made to the corresponding motion information, and when motion recognition is performed based on the motion feature, reference can be made to the corresponding human information and object information, thereby enhancing an interactivity between a target detection module and a motion recognition module, greatly utilizing multi-task potential, improving the accuracy of output results of the two modules, and further a accurate human-object interaction detection result can be obtained. The method may be used in a complex scenario, and is of great help to fine-grained motions, and the overall solution has a strong generalization capability.

In the present disclosure, a "sub-network" of a neural network does not necessarily have a neural network structure based on a layer composed of neurons. A "sub-network" may have another type of network structure, or may process data, features, and the like that are input to the sub-network using another processing method, which is not limited herein.

The embodiments of the present disclosure will be described below in detail with reference to the accompanying drawings.

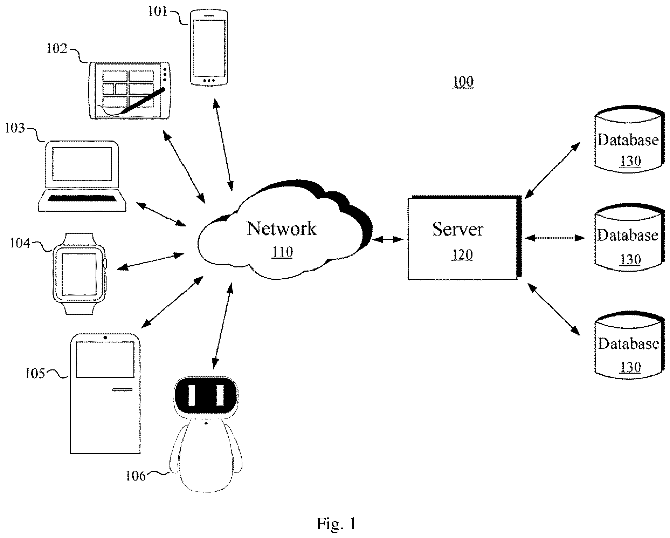

FIG. 1 is a schematic diagram of an exemplary system 100 in which various methods and apparatuses described herein can be implemented according to an embodiment of the present disclosure. Referring to FIG. 1, the system 100 includes one or more client devices 101, 102, 103, 104, 105, and 106, a server 120, and one or more communications networks 110 that couple the one or more client devices to the server 120. The client devices 101, 102, 103, 104, 105, and 106 may be configured to execute one or more application programs.

In an embodiment of the present disclosure, the server 120 can run one or more services or software applications that enable a human-object interaction detection method to be performed.

In some embodiments, the server 120 may further provide other services or software applications that may include a non-virtual environment and a virtual environment. In some embodiments, these services may be provided as web-based services or cloud services, for example, provided to a user of the client device 101, 102, 103, 104, 105, and/or 106 in a software as a service (SaaS) model.

In the configuration shown in FIG. 1, the server 120 may include one or more components that implement functions performed by the server 120. These components may include software components, hardware components, or a combination thereof that can be executed by one or more processors. A user operating the client device 101, 102, 103, 104, 105, and/or 106 may sequentially use one or more client application programs to interact with the server 120, thereby utilizing the services provided by these components. It should be understood that various system configurations are possible, which may be different from the system 100. Therefore, FIG. 1 is an example of the system for implementing various methods described herein, and is not intended to be limiting.

The user may input an image or a video for performing human-object interaction detection by using the client device 101, 102, 103, 104, 105, and/or 106. The client device may provide an interface that enables the user of the client device to interact with the client device. The client device may also output information to the user via the interface. Although FIG. 1 depicts only six types of client devices, those skilled in the art will understand that any number of client devices are possible in the present disclosure.

The client device 101, 102, 103, 104, 105, and/or 106 may include various types of computer devices, such as a portable handheld device, a general-purpose computer (such as a personal computer and a laptop computer), a workstation computer, a wearable device, a smart screen device, a self-service terminal device, a service robot, a gaming system, a thin client, various messaging devices, and a sensor or other sensing devices. These computer devices can run various types and versions of software application programs and operating systems, such as MICROSOFT Windows, APPLE iOS, a UNIX-like operating system, and a Linux or Linux-like operating system (e.g., GOOGLE Chrome OS); or include various mobile operating systems, such as MICROSOFT Windows Mobile OS, iOS, Windows Phone, and Android. The portable handheld device may include a cellular phone, a smartphone, a tablet computer, a personal digital assistant (PDA), etc. The wearable device may include a head-mounted display (such as smart glasses) and other devices. The gaming system may include various handheld gaming devices, Internet-enabled gaming devices, etc. The client device can execute various application programs, such as various Internet-related application programs, communication application programs (e.g., email application programs), and short message service (SMS) application programs, and can use various communication protocols.

The network 110 may be any type of network well known to those skilled in the art, and it may use any one of a plurality of available protocols (including but not limited to TCP/IP, SNA, IPX, etc.) to support data communication. As a mere example, the one or more networks 110 may be a local area network (LAN), an Ethernet-based network, a token ring, a wide area network (WAN), the Internet, a virtual network, a virtual private network (VPN), an intranet, an extranet, a public switched telephone network (PSTN), an infrared network, a wireless network (such as Bluetooth or Wi-Fi), and/or any combination of these and/or other networks.

The server 120 may include one or more general-purpose computers, a dedicated server computer (e.g., a personal computer (PC) server, a UNIX server, or a terminal server), a blade server, a mainframe computer, a server cluster, or any other suitable arrangement and/or combination. The server 120 may include one or more virtual machines running a virtual operating system, or other computing architectures relating to virtualization (e.g., one or more flexible pools of logical storage devices that can be virtualized to maintain virtual storage devices of a server). In various embodiments, the server 120 can run one or more services or software applications that provide functions described below.

A computing unit in the server 120 can run one or more operating systems including any of the above-mentioned operating systems and any commercially available server operating system. The server 120 can also run any one of various additional server application programs and/or middle-tier application programs, including an HTTP server, an FTP server, a CGI server, a JAVA server, a database server, etc.

In some implementations, the server 120 may include one or more application programs to analyze and merge data feeds and/or event updates received from users of the client device 101, 102, 103, 104, 105, and/or 106. The server 120 may further include one or more application programs to display the data feeds and/or real-time events via one or more display devices of the client device 101, 102, 103, 104, 105, and/or 106.

In some implementations, the server 120 may be a server in a distributed system, or a server combined with a blockchain. The server 120 may alternatively be a cloud server, or an intelligent cloud computing server or intelligent cloud host with artificial intelligence technologies. The cloud server is a host product in a cloud computing service system, to overcome the shortcomings of difficult management and weak service scalability in conventional physical host and virtual private server (VPS) services.

The system 100 may further include one or more databases 130. In some embodiments, these databases can be used to store data and other information. For example, one or more of the databases 130 can be used to store information such as an audio file and a video file. The databases 130 may reside in various locations. For example, a database used by the server 120 may be locally in the server 120, or may be remote from the server 120 and may communicate with the server 120 via a network-based or dedicated connection. The databases 130 may be of different types. In some embodiments, the database used by the server 120 may be, for example, a relational database. One or more of these databases can store, update, and retrieve data from or to the database, in response to a command.

In some embodiments, one or more of the databases 130 may also be used by an application program to store application program data. The database used by the application program may be of different types, for example, may be a key-value repository, an object repository, or a regular repository backed by a file system.

The system 100 of FIG. 1 may be configured and operated in various manners, such that the various methods and apparatuses described according to the present disclosure can be applied.

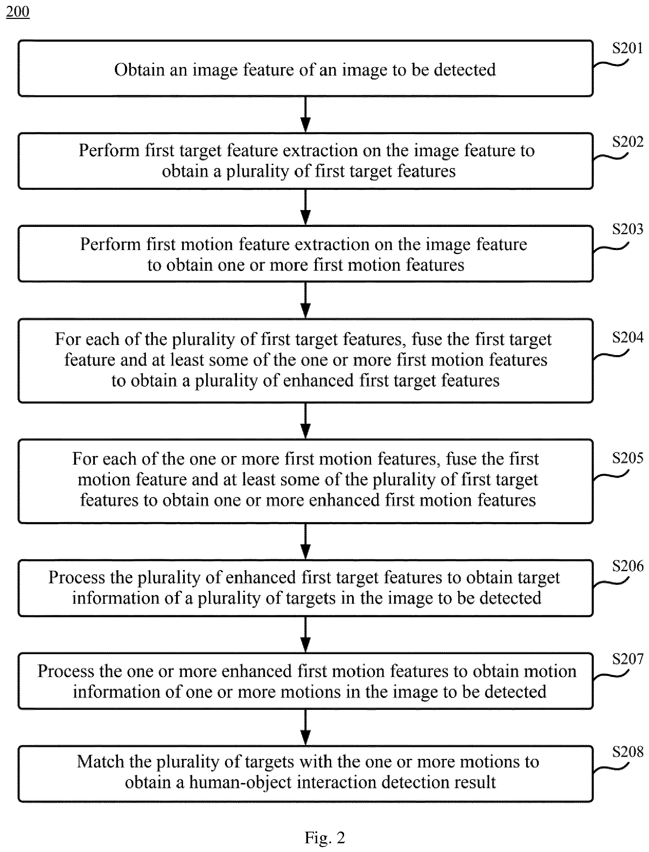

According to an aspect of the present disclosure, there is provided a human-object interaction detection method. As shown in FIG. 2, the method includes: step S201: obtaining an image feature of an image to be detected; step S202: performing first target feature extraction on the image feature to obtain a plurality of first target features; step S203: performing first motion feature extraction on the image feature to obtain one or more first motion features; step S204: for each of the plurality of first target features, fusing the first target feature and at least some of the one or more first motion features to obtain a plurality of enhanced first target features; step S205: for each of the one or more first motion features, fusing the first motion feature and at least some of the plurality of first target features to obtain one or more enhanced first motion features; step S206: processing the plurality of enhanced first target features to obtain target information of a plurality of targets in the image to be detected, where the plurality of targets include one or more human targets and one or more object targets; step S207: processing the one or more enhanced first motion features to obtain motion information of one or more motions in the image to be detected, where each of the one or more motions is associated with one of the one or more human targets, and one of the one or more object targets; and step S208: matching the plurality of targets with the one or more motions to obtain a human-object interaction detection result.

Thus, corresponding motion information is fused into each target feature, and corresponding human information and object information are fused into each motion feature, such that when target detection is performed based on the target feature, reference can be made to the corresponding motion information, and when motion recognition is performed based on the motion feature, reference can be made to the corresponding human information and object information, thereby enhancing an interactivity between a target detection module and a motion recognition module, greatly utilizing multi-task potential, improving the accuracy of output results of the two modules, and further obtaining a more accurate human-object interaction detection result. The method may be used in a complex scenario, and is of great help to fine-grained motions, and the overall solution has a strong generalization capability.

According to some embodiments, the image to be detected may be, for example, any image that involves a human-object interaction. In some embodiments, the image to be detected may include a plurality of targets that include one or more human targets and one or more object targets. In addition, the image to be detected may further include one or more motions, and each motion is associated with one of the one or more human targets, and one of the one or more object targets.

In the present disclosure, the "motion" may be used to indicate an interaction between a human and an object, rather than a specific motion. The "motion" may further include a plurality of specific sub-motions. In an exemplary embodiment, the image to be detected includes a person holding a cup and drinking water, then there is a motion between a corresponding human (the person drinking water) and a corresponding object (the cup) in the image to be detected, and the motion includes two sub-motions "raise the cup" and "drink water". Thus, by recognizing a motion between a human and an object, it may be determined that there is an interaction between the human and the object, and then a corresponding motion feature may be analyzed to determine a specific sub-motion that occurs between the human and the object.

In some embodiments, the image feature of the image to be detected may be obtained, for example, based on an existing image feature extraction backbone network such as ResNet50 and ResNet101. In some embodiments, after the backbone network, a transformer encoder may be used to further extract an image feature. By using the above method, a single image feature corresponding to the image to be detected may be obtained, or a plurality of image features corresponding to the image to be detected may be obtained, which is not limited herein. In an exemplary embodiment, the image to be detected is processed by using the backbone network to obtain an image feature of a size of $H \times W \times C$ (i.e., a feature map), which is then expanded to obtain an image feature of a size of C × HW (i.e., HW one-dimensional image features with a length of C). These image features are input to the transformer encoder, and enhanced image features of the same size (i.e., the same number) may be obtained for further processing.

According to some embodiments, a pre-trained convolutional neural network may be used to process the image feature to obtain a first target feature for target detection. The first target feature may be further input to a pre-trained target detection sub-network to obtain a target included in the image to be detected and target information of the target.

According to some embodiments, a transformer decoder may be used to decode the image feature to obtain a decoded first target feature. In some embodiments, the image feature includes a plurality of corresponding image-key features and a plurality of corresponding image-value features, i.e., features K and features V. The features K and the features V may be obtained, for example, by using a different set of parameter matrices $W_K$ and Wv to map the image feature, where $W_K$ and Wv are obtained by training.

According to some embodiments, step S202 of performing first target feature extraction on the image feature to obtain a plurality of first target features may include: obtaining a plurality of pre-trained target-query features, i.e., features Q; and for each of the plurality of target-query features, determining a first target feature corresponding to the target-query feature based on a query result of the target-query feature for the plurality of image-key features and based on the plurality of image-value features. In some embodiments, a plurality of transformer decoders may also be cascaded to enhance the first target feature. Thus, by using the target-query features, the plurality of image-key features may be queried for image-value features that are more likely to include target information, and based on these image-value features, a plurality of first target features may be extracted.

Similarly, another pre-trained convolutional neural network may be used to process the image feature to obtain a first motion feature for motion recognition. The first motion feature may be further input to a pre-trained motion recognition sub-network to obtain a motion included in the image to be detected, i.e., to determine whether there is a human-object interaction in the image to be detected.

According to some embodiments, another transformer decoder may be used to decode the image feature to obtain a decoded first motion feature. In some embodiments, the image feature includes a plurality of corresponding image-key features and a plurality of corresponding image-value features, i.e., features K and features V. The features K and the features V may be obtained, for example, by using a different set of parameter matrices $W_K$ and Wv to map the image feature, where $W_K$ and Wv are obtained by training. The parameter matrices used herein may be the same as or different from the parameter matrices used above for extracting the target feature, which is not limited herein.

According to some embodiments, step S203 of performing first motion feature extraction on the image feature to obtain one or more first motion features may include: obtaining one or more pre-trained motion-query features, i.e., features Q; and for each of the one or more motion-query features, determining a first motion feature corresponding to the motion-query feature based on a query result of the motion-query feature for the plurality of image-key features and based on the plurality of image-value features. Thus, by using the motion-query features, the plurality of image-key features may be queried for image-value features that are more likely to include motion information, and based on these image-value features, a plurality of first motion features may be extracted. It should be noted that the features Q as the motion-query features may be different from the features Q as the target-query features above. In some embodiments, a plurality of transformer decoders may also be cascaded to enhance the first motion feature.

After the plurality of first target features and at least one first motion feature are obtained, the two may be fused to fuse corresponding motion information into a target feature, and fuse corresponding target information into a motion feature to improve an interactivity between the two features, to improve the accuracy of a target detection task, a motion recognition task, and an object-motion matching task.

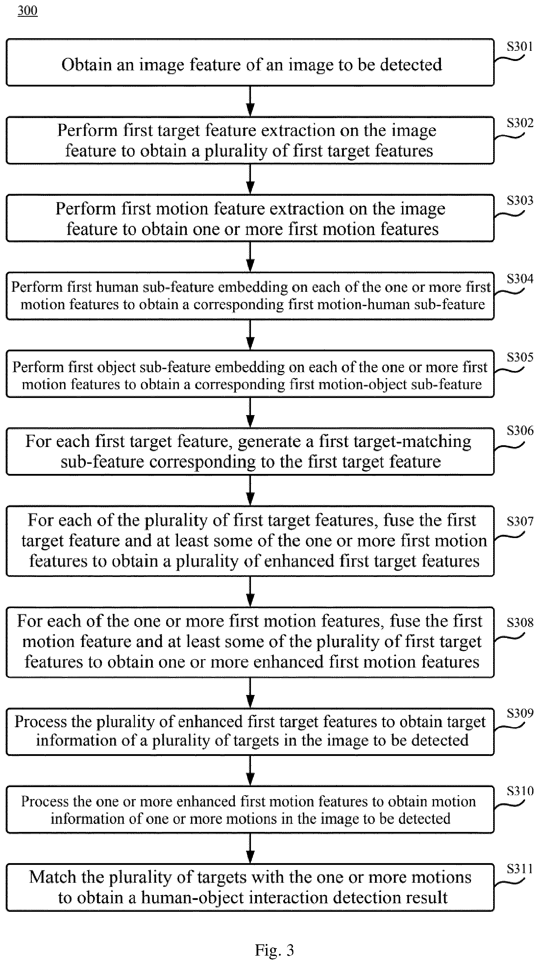

According to some embodiments, as shown in FIG. 3, the human-object interaction detection method may further include: step S304: performing first human sub-feature embedding on each of the one or more first motion features to obtain a corresponding first motion-human sub-feature; and step S305: performing first object sub-feature embedding on each of the one or more first motion features to obtain a corresponding first motion-object sub-feature. It can be understood that operations of step S301 to step S303 and operations of step S307 to step S311 in FIG. 3 are respectively similar to those of step S201 to step S208 in FIG. 2. Details are not described herein again.

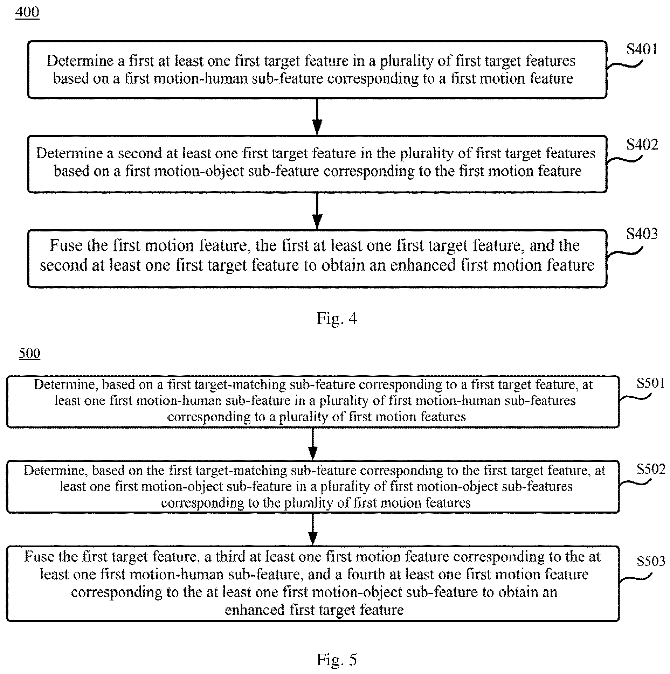

According to some embodiments, as shown in FIG. 4, step S308 of fusing the first motion feature and at least some of the plurality of first target features may include: step S401: determining a first at least one first target feature in the plurality of first target features based on the first motion-human sub-feature corresponding to the first motion feature; step S402: determining a second at least one first target feature in the plurality of first target features based on the first motion-object sub-feature corresponding to the first motion feature; and step S403: fusing the first motion feature, the first at least one first target feature, and the second at least one first target feature to obtain an enhanced first motion feature.

Thus, a motion feature is embedded to obtain a human sub-feature and an object sub-feature, such that when a motion feature and a target feature are fused, a target feature most related to a corresponding human sub-feature and a target feature most related to a corresponding object sub-feature may be determined. These target features are fused into the motion feature, to enhance the motion feature to improve the accuracy of subsequent motion recognition and human-object interaction detection.

According to some embodiments, the first human sub-feature embedding and the first object sub-feature embedding each may be implemented, for example, by using a multi-layer perceptron (MLP), but the two embeddings use different parameters. The first motion-human sub-feature may be represented as, for example,

$$e_i^h \in R^d$$

, the first motion-object sub-feature may be represented as, for example, $e_i^o \in R^d$, where $d$ is a length of a feature vector, and $i$ represents each motion feature. It should be noted that feature vectors of the two sub-features have the same length.

According to some embodiments, as shown in FIG. 3, the human-object interaction detection method may further include: step S306: for each first target feature, generating a first target-matching sub-feature corresponding to the first target feature. Step S401 of determining a first at least one first target feature may include: determining, based on the first motion-human sub-feature corresponding to the first motion feature, a first at least one first target-matching sub-feature in a plurality of first target-matching sub-features corresponding to the plurality of first target features; and determining at least one first target feature corresponding to the first at least one first target-matching sub-feature as the first at least one first target feature. Step S402 of determining a second at least one first target feature may include: determining, based on the first motion-object sub-feature corresponding to the first motion feature, a second at least one first target-matching sub-feature in the plurality of first target-matching sub-features corresponding to the plurality of first target features; and determining at least one first target feature corresponding to the second at least one first target-matching sub-feature as the second at least one first target feature. Thus, a target feature is embedded to obtain a matching sub-feature to match a human sub-feature and an object sub-feature, such that a matching task between a target feature and a motion feature and a subsequent target detection task use different feature vectors, to avoid interference to improve the accuracy of the two tasks.

According to some embodiments, for each first target feature, a first target-matching sub-feature corresponding to the first target feature may also be generated by using the multi-layer perceptron (MLP) for embedding, but parameters used herein are different from the parameters used for the first human sub-feature embedding and the first object sub-feature embedding. In an exemplary embodiment, the first target-matching sub-feature may be represented as $\mu_j \in R^d$, where d is a length of a feature vector, j represents each target feature, and the matching sub-feature, the above human sub-feature, and the above object sub-feature have the same length.

According to some embodiments, step S401 of determining a first at least one first target feature may include: determining the first at least one first target feature based on a similarity between the corresponding first motion-human sub-feature and each of the plurality of first target features. Step S402 of determining a second at least one first target feature may include: determining the second at least one first target feature based on a similarity between the corresponding first motion-object sub-feature and each of the plurality of first target features. It can be understood that those skilled in the art may use, according to needs, another method to determine the first at least one first target feature and the second at least one first target feature in the plurality of first targets. For example, a neural network may be used to process a corresponding human sub-feature, a corresponding object sub-feature, and a corresponding first target feature, to calculate relevance and so on, which is not limited herein.

In an exemplary embodiment, the first at least one first target feature may include only one first target feature, and the second at least one first target feature may also include only one first target feature. Determination processes of step S401 and step S402 may be expressed by the following formulas:

$$m_i^h = argmax_j (e_i^h)^T \mu_j$$

$$m_i^o = argmax_j (e_i^o)^T \mu_j$$

Here, $m_i^h$ and $m_i^o$ are a target corresponding to the human sub-feature determined based on the first motion feature and a target corresponding to the object sub-feature determined based on the first motion feature.

According to some embodiments, step S308 of fusing the first motion feature and at least some of the plurality of first target features may further include: fusing the first motion feature and the at least some of the plurality of first target features based on a weight corresponding to the first motion feature and a weight corresponding to each of the at least some of the first target features. It can be understood that, those skilled in the art may determine, according to needs, a weight of each feature to be fused, to improve performance of a fused feature.

In an exemplary embodiment, the first target feature may be enhanced through the following formula:

$$x_i'^a = x_i^a + W_h x_{m_i^h}^{in} + W_o x_{m_i^o}^{in}$$

Here, $x_i^a$ is a current motion feature, $x_i'^a$ is an updated feature, $x_{m_i^h}^{in}$ is a target feature of a target corresponding to a human sub-feature, $x_{m_i^o}^{in}$ is a target feature of a target corresponding to an object sub-feature, $W_h$ and $W_o$ are respective fusion weights of the two target features.

According to some embodiments, step S307 of fusing the first target feature and at least some of the one or more first motion features may include: determining, based on the first target feature, at least one first motion-human sub-feature in a plurality of first motion-human sub-features corresponding to the plurality of first motion features; determining, based on the first target feature, at least one first motion-object sub-feature in a plurality of first motion-object sub-features corresponding to the plurality of first motion features; and fusing the first target feature, a first at least one first motion feature corresponding to the at least one first motion-human sub-feature, and a second at least one first motion feature corresponding to the at least one first motion-object sub-feature to obtain an enhanced first target feature.

Thus, for each target feature, the most related human sub-feature and the most related object sub-feature are determined, the motion feature corresponding to the human sub-feature and the motion feature corresponding to the object sub-feature are fused into the target feature, such that the target feature is enhanced to improve the accuracy of subsequent target detection and human-object interaction detection.

According to some embodiments, as shown in FIG. 5, after the embedding is performed on the first target feature to obtain the first target-matching sub-feature, step S307 of fusing the first target feature and at least some of the one or more first motion features may include: step S501: determining, based on the first target-matching sub-feature corresponding to the first target feature, at least one first motion-human sub-feature in a plurality of first motion-human sub-features corresponding to the plurality of first motion features; step S502: determining, based on the first target-matching sub-feature corresponding to the first target feature, at least one first motion-object sub-feature in a plurality of first motion-object sub-features corresponding to the plurality of first motion features; and step S503: fusing the first target feature, a third at least one first motion feature corresponding to the at least one first motion-human sub-feature, and a fourth at least one first motion feature corresponding to the at least one first motion-object sub-feature to obtain an enhanced first target feature.

Thus, for each target feature, by determining the closest human sub-feature and the closest object sub-feature based on the matching sub-feature obtained after embedding, such that accuracy of a matching task between the matching sub-feature and the human sub-feature, a matching task between the matching sub-feature and the object sub-feature, and a subsequent target detection task may be improved.

In an exemplary embodiment, determination processes of step S501 and step S502 may be expressed by the following formulas:

$$p_i^h = argmax_j (\mu_i)^T e_j^h$$

$$p_i^o = argmax_j (\mu_i)^T e_j^o$$

Here, $p_i^h$ and $p_i^o$ are a motion corresponding to the human sub-feature corresponding to the matching sub-feature determined based on the target feature and a motion corresponding to the object sub-feature corresponding to the matching sub-feature determined based on the target feature.

According to some embodiments, step S307 of fusing the first target feature and at least some of the one or more first motion features includes: fusing the first target feature and the at least some of the one or more first motion features based on a weight corresponding to the first target feature and a weight corresponding to each of the at least some of the first motion features. It can be understood that, those skilled in the art may determine, according to needs, a weight of each feature to be fused, to improve performance of a fused feature.

In an exemplary embodiment, the first target feature may be enhanced through the following formula:

$$x_i'^{in} = x_i^{in} + Q_h x_{p_i^h}^a + Q_o x_{p_i^o}^a$$

Here, $x_i^{in}$ is a current target feature, $x_i'^{in}$ is an updated feature, $x_{p_i^h}^a$ is a motion feature corresponding to a human sub-feature corresponding to the matching sub-feature, $x_{p_i^o}^a$ is a motion feature corresponding to an object sub-feature corresponding to the matching sub-feature, $Q_h$ and $Q_o$ are respective fusion

weights of the two motion features.

According to some embodiments, step S308 of fusing the first motion feature and at least some of the plurality of first target features may further include: fusing the first motion feature and at least some of the plurality of enhanced first target features after the plurality of enhanced first target features are obtained. That is, after the first target feature and the first motion feature are obtained, the first target feature may be enhanced first, and then the first motion feature is enhanced based on the enhanced first target feature.

According to some embodiments, step S308 of fusing the first target feature and at least some of the one or more first motion features includes: fusing the first target feature and at least some of the one or more enhanced first motion features after the one or more enhanced first motion features are obtained. That is, after the first target feature and the first motion feature are obtained, the first motion feature may be enhanced first, and then the first target feature is enhanced based on the enhanced first motion feature.

It can be understood that enhancement of the first motion feature and the first target feature may also be performed based on a first motion feature that is not enhanced and a first target feature that is not enhanced, which is not limited herein.

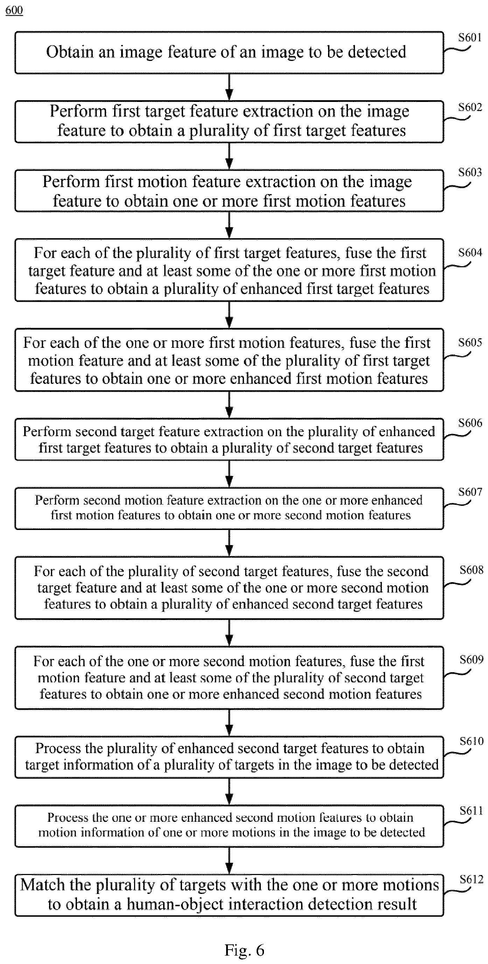

According to some embodiments, a plurality of rounds of fusion and enhancement may be performed on the first motion feature and the first target feature. As shown in FIG. 6, the human-object interaction detection method may further include: step S606: performing second target feature extraction on the plurality of enhanced first target features to obtain a plurality of second target features; step S607: performing second motion feature extraction on the one or more enhanced first motion features to obtain one or more second motion features; step S608: for each of the plurality of second target features, fusing the second target feature and at least some of the one or more second motion features to obtain a plurality of enhanced second target features; and step S609: for each of the one or more second motion features, fusing the second motion feature and at least some of the plurality of second target features to obtain one or more enhanced second motion features. It can be understood that operations of step S601 to step S605 and operations of step S610 to step S612 in FIG. 6 are respectively similar to those of step S201 to step S208 in FIG. 2 . Details are not described herein again.

According to some embodiments, step S610 of processing the plurality of enhanced first target features may include: processing the plurality of enhanced second target features. Step S611 of processing the one or more enhanced first motion features may include: processing the one or more enhanced second motion features. It can be understood that the enhanced second target feature is a feature obtained by fusing the first target feature, further performing feature extraction on the first target feature, and further fusing, and therefore, the enhanced second target feature may be considered as a feature obtained by enhancing the first target feature. Similarly, the enhanced second motion feature is a feature obtained by fusing the first motion feature, further performing feature extraction on the first motion feature, and further fusing, and therefore, the enhanced second motion feature may be considered as a feature obtained by enhancing the first motion feature.

Thus, by performing the second round of feature fusion, the motion feature and the target feature can be further enhanced to further improve an interactivity between the two features and between the target detection task and the motion recognition task, to improve the accuracy of a final human-object interaction detection result.

According to some embodiments, the target information may include, for example, a type of a corresponding target, a bounding box surrounding the corresponding target, and a confidence level. In some embodiments, step S610 of processing the enhanced target features may include, for example, using a multi-layer perceptron to regress a location, a classification class, and a corresponding confidence level of an object.

According to some embodiments, each of the one or more motions may include at least one sub-motion between a corresponding human target and a corresponding object target, and the motion information may include, for example, a type and a confidence level of each of the at least one sub-motion. Step S611 of processing the enhanced motion features may include, for example, using a multi-layer perceptron to process each motion feature to obtain a binary classification result corresponding to each sub-motion between a human and an object that are related to the motion feature and a corresponding confidence level. It can be understood that those skilled in the art may select a corresponding target detection method and a corresponding motion recognition method by themselves to process the target feature and the motion feature, which is not limited herein.

According to some embodiments, step S612 of matching the plurality of targets with the one or more motions may be performed, for example, based on a similarity between a corresponding motion feature and a corresponding target feature, may be performed based on a similarity between a corresponding matching sub-feature and each of a corresponding human sub-feature and a corresponding object sub-feature, or may be performed based on another method, which is not limited herein.

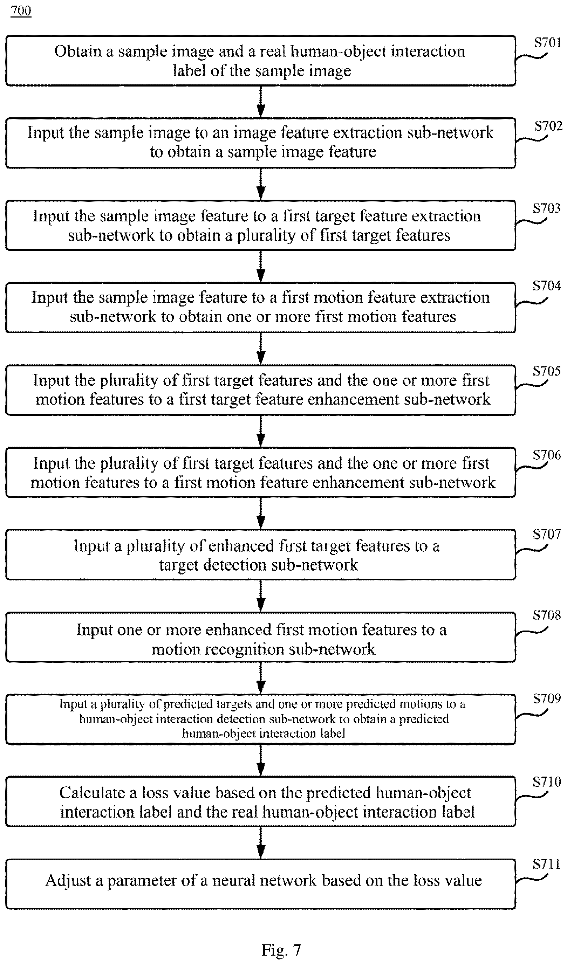

According to another aspect of the present disclosure, there is provided a training method for a neural network. The neural network includes an image feature extraction sub-network, a first target feature extraction sub-network, a first motion feature extraction sub-network, a first target feature enhancement sub-network, a first motion feature enhancement sub-network, a target detection sub-network, a motion recognition sub-network, and a human-object interaction detection sub-network. As shown in FIG. 7, the training method for a neural network includes: step S701: obtaining a sample image and a ground truth human-object interaction label of the sample image; step S702: inputting the sample image to the image feature extraction sub-network to obtain a sample image feature; step S703: inputting the sample image feature to the first target feature extraction sub-network to obtain a plurality of first target features; step S704: inputting the sample image feature to the first motion feature extraction sub-network to obtain one or more first motion features; step S705: inputting the plurality of first target features and the one or more first motion features to the first target feature enhancement sub-network, where the first target feature enhancement sub-network is configured to: for each of the plurality of first target features, fuse the first target feature and at least some of the one or more first motion features to obtain a plurality of enhanced first target features; step S706: inputting the plurality of first target features and the one or more first motion features to the first motion feature enhancement sub-network, where the first motion feature enhancement sub-network is configured to: for each of the one or more first motion features, fuse the first motion feature and at least some of the plurality of first target features to obtain one or more enhanced first motion features; step S707: inputting the plurality of enhanced first target features to the target detection sub-network, where the target detection sub-network is configured to receive the plurality of enhanced first target features to output target information of a plurality of predicted targets in the sample image, where the plurality of predicted targets include one or more predicted human targets and one or more predicted object targets; step S708: inputting the one or more enhanced first motion features to the motion recognition sub-network, where the motion recognition sub-network is configured to receive the one or more enhanced first motion features to output motion information of one or more predicted motions in the sample image, where each of the one or more predicted motions is associated with one of the one or more predicted human targets, and one of the one or more predicted object targets; step S709: inputting the plurality of predicted targets and the one or more predicted motions to the human-object interaction detection sub-network to obtain a predicted human-object interaction label; step S710: calculating a loss value based on the predicted human-object interaction label and the ground truth human-object interaction label; and step S711: adjusting a parameter of the neural network based on the loss value. It can be understood that operations on the sample image in step S702 to step S709 in FIG. 7 are similar to operations on the image to be detected in step S201 to step S208 in FIG. 2, and the operations of each of step S201 to step S208 may be implemented by a neural network or a sub-neural network having a corresponding function. Therefore, these steps in FIG. 7 are not described herein again.

Thus, corresponding motion information is fused into each target feature, and corresponding human information and object information are fused into each motion feature, such that when a trained neural network performs target detection based on the target feature, reference can be made to the corresponding motion information, and when the trained neural network performs motion recognition is based on the motion feature, reference can be made to the corresponding human information and object information, thereby enhancing an interactivity between a target detection module and a motion recognition module, greatly utilizing multi-task potential, improving the accuracy of output results of the two modules, and further obtaining a more accurate human-object interaction detection result. The method may be used in a complex scenario, and is of great help to fine-grained motions, and the overall solution has a strong generalization capability.

According to some embodiments, the sample image may be, for example, any image that involves a human-object interaction. In some embodiments, the sample image may include a plurality of targets that include one or more human targets and one or more object targets. In addition, the sample image may further include one or more motions, and each motion is associated with one of the one or more human targets, and one of the one or more object targets. In some embodiments, the ground truth human-object interaction label of the sample image is manually annotated.

In some embodiments, the image feature of the sample image may be obtained, for example, based on an existing image feature extraction backbone network such as ResNet50 and ResNet101. In some embodiments, after the backbone network, a transformer encoder may be used to further extract an image feature. By using the above method, a single image feature corresponding to the sample image may be obtained, and a plurality of image features corresponding to the sample image may also be obtained, which is not limited herein. In an exemplary embodiment, the sample image is processed by using the backbone network to obtain an image feature of a size of $H \times W \times C$ (i.e., a feature map), which is then expanded to obtain an image feature of a size of $C \times HW$ (i.e., HW one-dimensional image features with a length of C). These image features are input to the transformer encoder, and enhanced image features of the same size (i.e., the same number) may be obtained for further processing.

According to some embodiments, a transformer decoder may be used to decode the sample image feature to obtain a decoded first target feature. In some embodiments, the sample image feature includes a plurality of corresponding image-key features and a plurality of corresponding image-value features, i.e., features K and features V. The features K and the features V may be obtained, for example, by using a different set of parameter matrices $W_K$ and $W_V$ to map the image feature, where $W_K$ and $W_V$ are obtained by training.

According to some embodiments, the first target feature extraction sub-network may be further configured to: obtain a plurality of pre-trained target-query features, i.e., features Q; and for each of the plurality of target-query features, determine a first target feature corresponding to the target-query feature based on a query result of the target-query feature for the plurality of image-key features and based on the plurality of image-value features. In some embodiments, a plurality of transformer decoders may also be cascaded to enhance the first target feature. Thus, by using the target-query features, the plurality of image-key features may be queried for image-value features that are more likely to include target information, and based on these image-value features, a plurality of first target features may be extracted.

According to some embodiments, another transformer decoder may be used to decode the sample image feature to obtain a decoded first motion feature. In some embodiments, the sample image feature includes a plurality of corresponding image-key features and a plurality of corresponding image-value features, i.e., features K and features V. The features K and the features V may be obtained, for example, by using a different set of parameter matrices $W_K$ and Wv to map the image feature, where $W_K$ and Wv are obtained by training. The parameter matrices used herein may be the same as or different from the parameter matrices used above for extracting the target feature, which is not limited herein.

According to some embodiments, the first motion feature extraction sub-network may be further configured to: obtain one or more pre-trained motion-query features, i.e., features Q; and for each of the one or more motion-query features, determine a first motion feature corresponding to the motion-query feature based on a query result of the motion-query feature for the plurality of image-key features and based on the plurality of image-value features. Thus, by using the motion-query features, the plurality of image-key features may be queried for image-value features that are more likely to include motion information, and based on these image-value features, a plurality of first motion features may be extracted. It should be noted that the features Q as the motion-query features may be different from the features Q as the target-query features above. In some embodiments, a plurality of transformer decoders may also be cascaded to enhance the first motion feature.

After the plurality of first target features and at least one first motion feature are obtained, the two may be fused to fuse corresponding motion information into a target feature, and fuse corresponding target information into a motion feature to improve an interactivity between the two features, to improve the accuracy of the trained neural network in performing a target detection task, a motion recognition task, and an object-motion matching task.

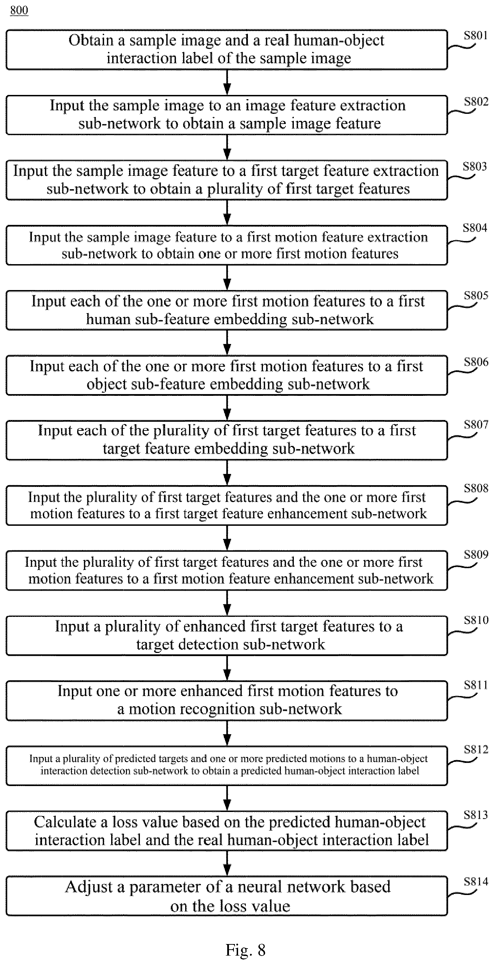

According to some embodiments, the neural network further includes a first human sub-feature embedding sub-network and a first object sub-feature embedding sub-network. As shown in FIG. 8, the training method may further include: step S805: inputting each of the one or more first motion features to the first human sub-feature embedding sub-network, where the first human sub-feature embedding sub-network is configured to receive the first motion feature to obtain a corresponding first motion-human sub-feature; and step S806: inputting each of the one or more first motion features to the first object sub-feature embedding sub-network, where the first object sub-feature embedding sub-network is configured to receive the first motion feature to obtain a corresponding first motion-object sub-feature. It can be understood that operations of step S801 to step S804 and operations of step S808 to step S814 in FIG. 8 are similar to those of step S701 to step S711 in FIG. 7. Details are not described herein again.

According to some embodiments, the first motion feature enhancement sub-network may be further configured to: determine a first at least one first target feature in the plurality of first target features based on the first motion-human sub-feature corresponding to the first motion feature; determine a second at least one first target feature in the plurality of first target features based on the first motion-object sub-feature corresponding to the first motion feature; and fuse the first motion feature, the first at least one first target feature, and the second at least one first target feature to obtain an enhanced first motion feature.

According to some embodiments, the neural network further includes a first target feature embedding sub-network. As shown in FIG. 8, the training method may further include: step S807: inputting each of the plurality of first target features to the first target feature embedding sub-network, where the first target feature embedding sub-network is configured to receive the first target feature to obtain a corresponding first target-matching sub-feature. In some embodiments, the determining a first at least one first target feature may include: determining, based on the first motion-human sub-feature corresponding to the first motion feature, a first at least one first target-matching sub-feature in a plurality of first target-matching sub-features corresponding to the plurality of first target features; and determining at least one first target feature corresponding to the first at least one first target-matching sub-feature as the first at least one first target feature. In some embodiments, the determining a second at least one first target feature may include: determining, based on the first motion-object sub-feature corresponding to the first motion feature, a second at least one first target-matching sub-feature in the plurality of first target-matching sub-features corresponding to the plurality of first target features; and determining at least one first target feature corresponding to the second at least one first target-matching sub-feature as the second at least one first target feature.

According to some embodiments, the determining a first at least one first target feature in the plurality of first target features based on the first motion-human sub-feature corresponding to the first motion feature may include: determining the first at least one first target feature based on a similarity between the corresponding first motion-human sub-feature and each of the plurality of first target features. The determining a second at least one first target feature in the plurality of first target features based on the first motion-object sub-feature corresponding to the first motion feature may include: determining the second at least one first target feature based on a similarity between the corresponding first motion-object sub-feature and each of the plurality of first target features.

In an exemplary embodiment, the first at least one first target feature may include only one first target feature, and the second at least one first target feature may also include only one first target feature.

According to some embodiments, the first motion feature enhancement sub-network may be further configured to: fuse the first motion feature and the at least some of the plurality of first target features based on a weight corresponding to the first motion feature and a weight corresponding to each of the at least some of the first target features.

According to some embodiments, the first target feature enhancement sub-network may be further configured to: determine, based on the first target-matching sub-feature corresponding to the first target feature, at least one first motion-human sub-feature in a plurality of first motion-human sub-features corresponding to the plurality of first motion features; determine, based on the first target-matching sub-feature corresponding to the first target feature, at least one first motion-object sub-feature in a plurality of first motion-object sub-features corresponding to the plurality of first motion features; and fuse the first target feature, a third at least one first motion feature corresponding to the at least one first motion-human sub-feature, and a fourth at least one first motion feature corresponding to the at least one first motion-object sub-feature to obtain an enhanced first target feature.

According to some embodiments, the first target feature enhancement sub-network may be further configured to: fuse the first target feature and the at least some of the one or more first motion features based on a weight corresponding to the first target feature and a weight corresponding to each of the at least some of the first motion features.

According to some embodiments, the first motion feature enhancement sub-network may be further configured to: fuse the first motion feature and at least some of the plurality of enhanced first target features after the plurality of enhanced first target features are obtained. That is, after the first target feature and the first motion feature are obtained, the first target feature may be enhanced first, and then the first motion feature is enhanced based on the enhanced first target feature.

According to some embodiments, the first target feature enhancement sub-network may be further configured to: fuse the first target feature and at least some of the one or more enhanced first motion features after the one or more enhanced first motion features are obtained. That is, after the first target feature and the first motion feature are obtained, the first motion feature may be enhanced first, and then the first target feature is enhanced based on the enhanced first motion feature.

It can be understood that enhancement of the first motion feature and the first target feature may also be performed based on a first motion feature that is not enhanced and a first target feature that is not enhanced, which is not limited herein.

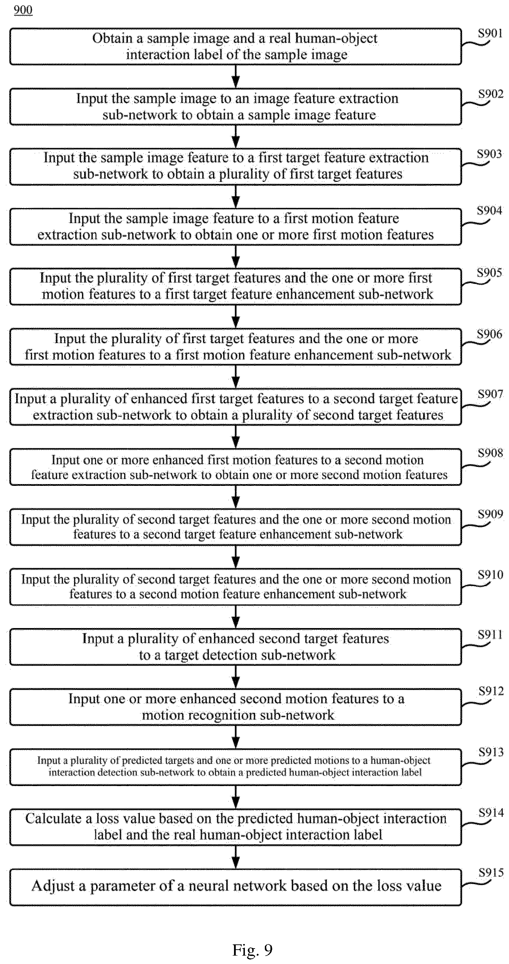

According to some embodiments, the neural network may further include a second target feature extraction sub-network, a second motion feature extraction sub-network, a second target feature enhancement sub-network, and a second motion feature enhancement sub-network. As shown in FIG. 9, the training method for a neural network may further include: step S907: inputting the plurality of enhanced first target features to the second target feature extraction sub-network to obtain a plurality of second target features; step S908: inputting the one or more enhanced first motion features to the second motion feature extraction sub-network to obtain one or more second motion features; step S909: inputting the plurality of second target features and the one or more second motion features to the second target feature enhancement sub-network, where the second target feature enhancement sub-network is configured to: for each of the plurality of second target features, fuse the second target feature and at least some of the one or more second motion features to obtain a plurality of enhanced second target features; and step S910: inputting the plurality of second target features and the one or more second motion features to the second motion feature enhancement sub-network, where the second motion feature enhancement sub-network is configured to: for each of the one or more second motion features, fuse the second motion feature and at least some of the plurality of second target features to obtain one or more enhanced second motion features. It can be understood that operations of step S901 to step S906 and operations of step S911 to step S915 in FIG. 9 are respectively similar to those of step S701 to step S711 in FIG. 7, which is not limited herein.

According to some embodiments, step S911 of inputting the plurality of enhanced first target features to the target detection sub-network may include: inputting the plurality of enhanced second target features to the target detection sub-network. The target detection sub-network may be further configured to receive the plurality of enhanced second target features to output the target information of the plurality of predicted targets in the sample image. Step S912 of inputting the one or more enhanced first motion features to the motion recognition sub-network may include: inputting the one or more enhanced second motion features to the motion recognition sub-network. The motion recognition sub-network may be further configured to receive the one or more enhanced second motion features to output the motion information of the one or more predicted motions in the sample image.

It can be understood that the enhanced second target feature is a feature obtained by fusing the first target feature, further performing feature extraction on the first target feature, and further fusing, and therefore, the enhanced second target feature may be considered as a feature obtained by enhancing the first target feature. Similarly, the enhanced second motion feature is a feature obtained by fusing the first motion feature, further performing feature extraction on the first motion feature, and further fusing, and therefore, the enhanced second motion feature may be considered as a feature obtained by enhancing the first motion feature.

Thus, by performing the second round of feature fusion, the motion feature and the target feature can be further enhanced to further improve an interactivity between the two features and between the target detection task and the motion recognition task, to improve the accuracy of a human-object interaction detection result finally output by a trained neural network model.

According to some embodiments, the target detection sub-network may be any sub-network capable of implementing the target detection task, including various traditional models and neural network models. It can be understood that those skilled in the art may select an appropriate existing model as the target detection sub-network according to needs, or may design the target detection sub-network by themselves, which is not limited herein.

The target detection sub-network can output, based on the input target feature, the target information of the targets included in the sample image. According to some embodiments, the target information may include a type of a corresponding target, a bounding box surrounding the corresponding target, and a confidence level. In some embodiments, the target detection sub-network may be configured to use a multi-layer perceptron to regress a location, a classification class, and a corresponding confidence level of a target.

According to some embodiments, the motion recognition sub-network may be any sub-network capable of implementing the motion recognition task, including various traditional models and neural network models. It can be understood that those skilled in the art may select an appropriate existing model as the motion recognition sub-network according to needs, or may design the motion recognition sub-network by themselves, which is not limited herein.

The motion recognition sub-network can output, based on the input motion feature, the motion information of the motions included in the sample image. According to some embodiments, each of the one or more motions may include at least one sub-motion between a corresponding human target and a corresponding object target, and the motion information may include a type and a confidence level of each of the at least one sub-motion.

In some embodiments, the motion recognition sub-network may be configured to use a multi-layer perceptron to process each motion feature to obtain a binary classification result corresponding to each sub-motion between a human and an object that are related to the motion feature and a corresponding confidence level.

According to some embodiments, the human-object interaction detection sub-network may be any sub-network capable of implementing matching of a motion and a target. In some embodiments, the human-object interaction detection sub-network may be configured to match a plurality of targets with one or more motions based on a similarity between a corresponding motion feature and a corresponding target feature, or may be configured to match a plurality of targets with one or more motions based on a similarity between a corresponding matching sub-feature and each of a corresponding human sub-feature and a corresponding object sub-feature, which is not limited herein. The human-object interaction detection sub-network can output a corresponding detection result, i.e., the predicted human-object interaction label. This result can represent a plurality of sets of motions between a human and an object that are detected in the sample image. In some embodiments, each set of motions in the human-object interaction detection result includes a bounding box and a confidence level of a corresponding human target, a bounding box and a confidence level of a corresponding object target, and a type and a confidence level of at least one sub-motion between the human target and the object target.

According to some embodiments, after the predicted human-object interaction label is obtained, the loss value may be calculated based on the predicted human-object interaction label and the ground truth human-object interaction label, and the parameter of each sub-network in the neural network described above may be further adjusted based on the loss value. In some embodiments, a plurality of batches and rounds of training may be performed using a plurality of samples until the neural network converges. In some embodiments, some of sub-networks in the neural network may be pre-trained, individually trained, or trained in combination to optimize an overall training process. It can be understood that those skilled in the art may further use another method to train the neural network and a sub-network thereof, which is not limited herein.

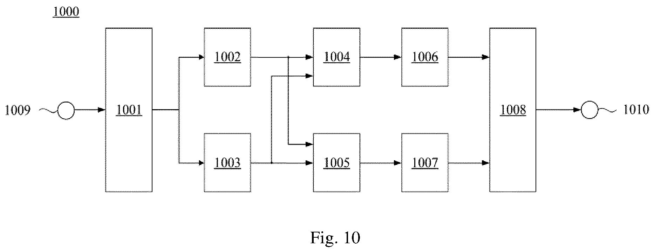

According to another aspect of the present disclosure, there is further provided a neural network for human-object interaction detection. As shown in FIG. 10, a neural network 1000 includes: an image feature extraction sub-network 1001 configured to receive an image 1009 to be detected to output an image feature of the image to be detected; a first target feature extraction sub-network 1002 configured to receive the image feature to output a plurality of first target features; a first motion feature extraction sub-network 1003 configured to receive the image feature to output one or more first motion features; a first target feature enhancement sub-network

1004 configured to: for each of the plurality of received first target features, fuse the first target feature and at least some of the one or more received first motion features to output a plurality of enhanced first target features; a first motion feature enhancement sub-network 1005 configured to: for each of the one or more received first motion features, fuse the first motion feature and at least some of the plurality of received first target features to output one or more enhanced first motion features; a target detection sub-network 1006 configured to receive the plurality of enhanced first target features to output target information of a plurality of targets in the image to be detected, where the plurality of targets include one or more human targets and one or more object targets; a motion recognition sub-network 1007 configured to receive the one or more enhanced first motion features to output motion information of one or more motions in the image to be detected, where each of the one or more motions is associated with one of the one or more human targets, and one of the one or more object targets; and a human-object interaction detection sub-network 1008 configured to match the plurality of received targets with the one or more motions to output a human-object interaction detection result 1010. It can be understood that operations of the sub-network 1001 to the sub-network 1008 in the neural network 1000 are similar to those of step S201 to step S208 in FIG. 2. Details are not described herein again.

Thus, corresponding motion information is fused into each target feature, and corresponding human information and object information are fused into each motion feature, such that when target detection is performed based on the target feature, reference can be made to the corresponding motion information, and when motion recognition is performed based on the motion feature, reference can be made to the corresponding human information and object information, thereby enhancing an interactivity between a target detection module and a motion recognition module, greatly utilizing multi-task potential, improving the accuracy of output results of the two modules, and further obtaining a more accurate human-object interaction detection result. The method may be used in a complex scenario, and is of great help to fine-grained motions, and the overall solution has a strong generalization capability.

According to some embodiments, the image 1009 to be detected may be, for example, any image that involves a human-object interaction. In some embodiments, the image 1009 to be detected may include a plurality of targets that include one or more human targets and one or more object targets. In addition, the image to be detected may further include one or more motions, and each motion is associated with one of the one or more human targets, and one of the one or more object targets.

In some embodiments, the image feature extraction sub-network 1001 may be based on, for example, an existing image feature extraction backbone network such as ResNet50 and ResNet101. In some embodiments, the image feature extraction sub-network 1001 may further include a transformer encoder after the backbone network to further extract an image feature. By using the above method, a single image feature corresponding to the image to be detected may be obtained, or a plurality of image features corresponding to the image to be detected may be obtained, which is not limited herein. In an exemplary embodiment, the image to be detected is processed by using the backbone network to obtain an image feature of a size of H × W × C (i.e., a feature map), which is then expanded to obtain an image feature of a size of C × HW (i.e., HW one-dimensional image features with a length of C). These image features are input to the transformer encoder, and enhanced image features of the same size (i.e., the same number) may be obtained for further processing.

According to some embodiments, a transformer decoder may be used as the first target feature extraction sub-network 1002 to decode the image feature to obtain a decoded first target feature. In some embodiments, the image feature includes a plurality of corresponding image-key features and a plurality of corresponding image-value features, i.e., features K and features V. The features K and the features V may be obtained, for example, by using a different set of parameter matrices $W_K$ and Wv to map the image feature, where $W_K$ and Wv are obtained by training.

According to some embodiments, the first target feature extraction sub-network 1002 is further configured to: obtain a plurality of pre-trained target-query features, i.e., features Q; and for each of the plurality of target-query features, determine a first target feature corresponding to the target-query feature based on a query result of the target-query feature for the plurality of image-key features and based on the plurality of image-value features. In some embodiments, a plurality of transformer decoders may also be cascaded to enhance the first target feature. Thus, by using the target-query features, the plurality of image-key features may be queried for image-value features that are more likely to include target information, and based on these image-value features, a plurality of first target features may be extracted.

According to some embodiments, another transformer decoder may be used as the first motion feature extraction sub-network 1003 to decode the image feature to obtain a decoded first motion feature. In some embodiments, the image feature includes a plurality of corresponding image-key features and a plurality of corresponding image-value features, i.e., features K and features V. The features K and the features V may be obtained, for example, by using a different set of parameter matrices $W_K$ and Wv to map the image feature, where $W_K$ and Wv are obtained by training. The parameter matrices used herein may be the same as or different from the parameter matrices used above for extracting the target feature, which is not limited herein.

According to some embodiments, the first motion feature extraction sub-network 1003 may be further configured to: obtain one or more pre-trained motion-query features, i.e., features Q; and for each of the one or more motion-query features, determine a first motion feature corresponding to the motion-query feature based on a query result of the motion-query feature for the plurality of image-key features and based on the plurality of image-value features. Thus, by using the motion-query features, the plurality of image-key features may be queried for image-value features that are more likely to include motion information, and based on these image-value features, a plurality of first motion features may be extracted. It should be noted that the features Q as the motion-query features may be different from the features Q as the target-query features above. In some embodiments, a plurality of transformer decoders may also be cascaded to enhance the first motion feature.

After the plurality of first target features and at least one first motion feature are obtained, the two may be fused to fuse corresponding motion information into a target feature, and fuse corresponding target information into a motion feature to improve an interactivity between the two features, to improve the accuracy of a target detection task, a motion recognition task, and an object-motion matching task.

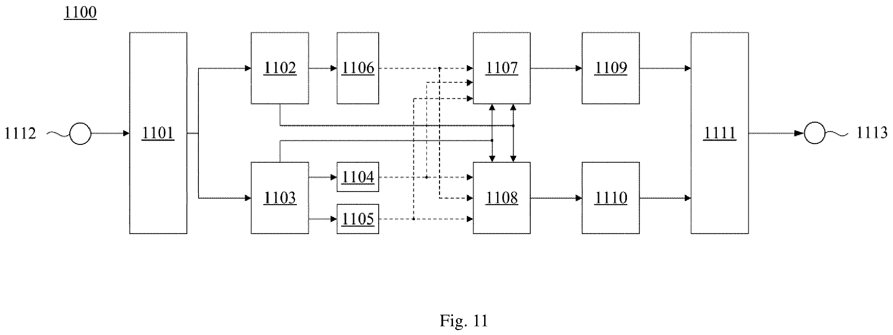

According to some embodiments, as shown in FIG. 11, a neural network 1100 further includes: a first human sub-feature embedding sub-network 1104 configured to receive the input first motion feature to output a corresponding first motion-human sub-feature; and a first object sub-feature embedding sub-network 1105 configured to receive the input first motion feature to obtain a corresponding first motion-object sub-feature. It can be understood that operations of a sub-network 1101 to a sub-network 1103 and those of a sub-network 1107 to a sub-network 1111 in FIG. 11 are similar to those of the sub-network 1001 to the sub-network 1008 in FIG. 10, and an input 1112 and an output 1113 are respectively similar to the input 1009 and the output 1010. Details are not described herein again.

According to some embodiments, the first motion feature enhancement sub-network 1108 may be further configured to: determine a first at least one first target feature in the plurality of first target features based on the first motion-human sub-feature corresponding to the first motion feature; determine a second at least one first target feature in the plurality of first target features based on the first motion-object sub-feature corresponding to the first motion feature; and fuse the first motion feature, the first at least one first target feature, and the second at least one first target feature to obtain an enhanced first motion feature.

According to some embodiments, as shown in FIG. 11, the neural network 1100 further includes: a first target feature embedding sub-network 1106 configured to receive the first target feature to obtain a corresponding first target-matching sub-feature. In some embodiments, the determining a first at least one first target feature may include: determining, based on the first motion-human sub-feature corresponding to the first motion feature, a first at least one first target-matching sub-feature in a plurality of first target-matching sub-features corresponding to the plurality of first target features; and determining at least one first target feature corresponding to the first at least one first target-matching sub-feature as the first at least one first target feature. In some embodiments, the determining a second at least one first target feature may include: determining, based on the first motion-object sub-feature corresponding to the first motion feature, a second at least one first target-matching sub-feature in the plurality of first target-matching sub-features corresponding to the plurality of first target features; and determining at least one first target feature corresponding to the second at least one first target-matching sub-feature as the second at least one first target feature.

According to some embodiments, the determining a first at least one first target feature in the plurality of first target features based on the first motion-human sub-feature corresponding to the first motion feature may include: determining the first at least one first target feature based on a similarity between the corresponding first motion-human sub-feature and each of the plurality of first target features. The determining a second at least one first target feature in the plurality of first target features based on the first motion-object sub-feature corresponding to the first motion feature may include: determining the second at least one first target feature based on a similarity between the corresponding first motion-object sub-feature and each of the plurality of first target features.

According to some embodiments, the first motion feature enhancement sub-network 1108 may be further configured to: fuse the first motion feature and the at least some of the plurality of first target features based on a weight corresponding to the first motion feature and a weight corresponding to each of the at least some of the first target features.

According to some embodiments, the first target feature enhancement sub-network 1107 may be further configured to: determine, based on the first target-matching sub-feature corresponding to the first target feature, at least one first motion-human sub-feature in a plurality of first motion-human sub-features corresponding to the plurality of first motion features; determine, based on the first target-matching sub-feature corresponding to the first target feature, at least one first motion-object sub-feature in a plurality of first motion-object sub-features corresponding to the plurality of first motion features; and fuse the first target feature, a third at least one first motion feature corresponding to the at least one first motion-human sub-feature, and a fourth at least one first motion feature corresponding to the at least one first motion-object sub-feature to obtain an enhanced first target feature.

According to some embodiments, the first target feature enhancement sub-network 1107 may be further configured to: fuse the first target feature and the at least some of the one or more first motion features based on a weight corresponding to the first target feature and a weight corresponding to each of the at least some of the first motion features.

According to some embodiments, the first motion feature enhancement sub-network 1108 may be further configured to: fuse the first motion feature and at least some of the plurality of enhanced first target features after the plurality of enhanced first target features are obtained. That is, after the first target feature and the first motion feature are obtained, the first target feature may be enhanced first, and then the first motion feature is enhanced based on the enhanced first target feature.

According to some embodiments, the first target feature enhancement sub-network 1107 may be further configured to: fuse the first target feature and at least some of the one or more enhanced first motion features after the one or more enhanced first motion features are obtained. That is, after the first target feature and the first motion feature are obtained, the first motion feature may be enhanced first, and then the first target feature is enhanced based on the enhanced first motion feature.

It can be understood that enhancement of the first motion feature and the first target feature may also be performed based on a first motion feature that is not enhanced and a first target feature that is not enhanced, which is not limited herein.

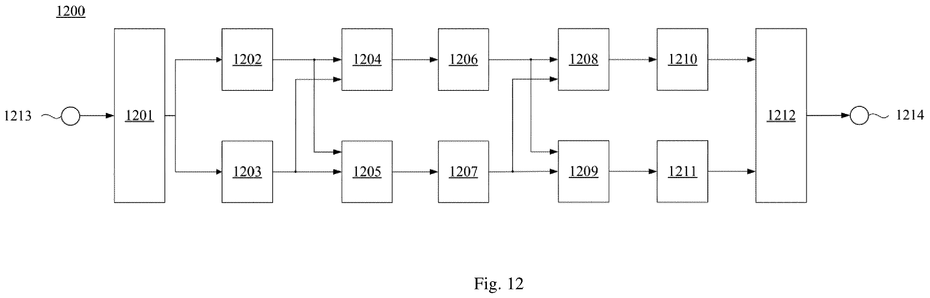

According to some embodiments, during enhancement of the target feature and the motion feature, a plurality of rounds of feature extraction and feature fusion operations may be performed to enhance related information in the target feature and the motion feature. As shown in FIG. 12, a neural network 1200 may further include: a second target feature extraction sub-network 1206 configured to receive the plurality of first target features to output a plurality of second target features; a second motion feature extraction sub-network 1207 configured to receive the one or more first motion features to output one or more second motion features; a second target feature enhancement sub-network 1208 configured to: for each of the plurality of received second target features, fuse the second target feature and at least some of the one or more received second motion features to output a plurality of enhanced second target features; a second motion feature enhancement sub-network 1209 configured to: for each of the one or more received second motion features, fuse the second motion feature and at least some of the plurality of received second target features to output one or more enhanced second motion features. It can be understood that operations of a sub-network 1201 to a sub-network 1205 and those of a sub-network 1210 to a sub-network 1212 in FIG. 12 are respectively similar to those of the sub-network 1001 to the sub-network 1008 in FIG. 10, and an input 1213 and an output 1214 are respectively similar to the input 1009 and the output 1010, which is not limited herein.

According to some embodiments, the target detection sub-network 1210 may be further configured to receive the plurality of enhanced second target features to output the target information of the plurality of targets in the image to be detected. The motion recognition sub-network 1211 may be further configured to receive the one or more enhanced second motion features to output the motion information of the one or more motions in the image to be detected. It can be understood that the enhanced second target feature is a feature obtained by fusing the first target feature, further performing feature extraction on the first target feature, and further fusing, and therefore, the enhanced second target feature may be considered as a feature obtained by enhancing the first target feature. Similarly, the enhanced second motion feature is a feature obtained by fusing the first motion feature, further performing feature extraction on the first motion feature, and further fusing, and therefore, the enhanced second motion feature may be considered as a feature obtained by enhancing the first motion feature.

Thus, by performing the second round of feature fusion, the motion feature and the target feature can be further enhanced to further improve an interactivity between the two features and between the target detection task and the motion recognition task, to improve the accuracy of a human-object interaction detection result finally output by a trained neural network model.

According to some embodiments, the target detection sub-network 1210 may be any sub-network capable of implementing the target detection task, including various traditional models and neural network models. It can be understood that those skilled in the art may select an appropriate existing model as the target detection sub-network according to needs, or may design the target detection sub-network by themselves, which is not limited herein.

The target detection sub-network can output, based on the input target feature, the target information of the targets included in the sample image. According to some embodiments, the target information may include a type of a corresponding target, a bounding box surrounding the corresponding target, and a confidence level. In some embodiments, the target detection sub-network 1210 may be configured to use a multi-layer perceptron to regress a location, a classification class, and a corresponding confidence level of a target.

According to some embodiments, the motion recognition sub-network 1211 may be any sub-network capable of implementing the motion recognition task, including various traditional models and neural network models. It can be understood that those skilled in the art may select an appropriate existing model as the motion recognition sub-network according to needs, or may design the motion recognition sub-network by themselves, which is not limited herein.

The motion recognition sub-network can output, based on the input motion feature, the motion information of the motions included in the sample image. According to some embodiments, each of the one or more motions may include at least one sub-motion between a corresponding human target and a corresponding object target, and the motion information may include a type and a confidence level of each of the at least one sub-motion. In some embodiments, the motion recognition sub-network 1211 may be configured to use a multi-layer perceptron to process each motion feature to obtain a binary classification result corresponding to each sub-motion between a human and an object that are related to the motion feature and a corresponding confidence level.

According to some embodiments, the human-object interaction detection sub-network 1212 may be any sub-network capable of implementing matching of a motion and a target. In some embodiments, the human-object interaction detection sub-network 1212 may be configured to match a plurality of targets with one or more motions based on a similarity between a corresponding motion feature and a corresponding target feature, or may be configured to match a plurality of targets with one or more motions based on a similarity between a corresponding matching sub-feature and each of a corresponding human sub-feature and a corresponding object sub-feature, which is not limited herein. The human-object interaction detection sub-network can output a corresponding detection result, that is, the predicted human-object interaction label. This result can represent a plurality of sets of motions between a human and an object that are detected in the sample image. In some embodiments, each set of motions in the human-object interaction detection result 1214 includes a bounding box and a confidence level of a corresponding human target, a bounding box and a confidence level of a corresponding object target, and a type and a confidence level of at least one sub-motion between the human target and the object target.

According to the embodiments of the present disclosure, there are further provided an electronic device, a readable storage medium, and a computer program product.

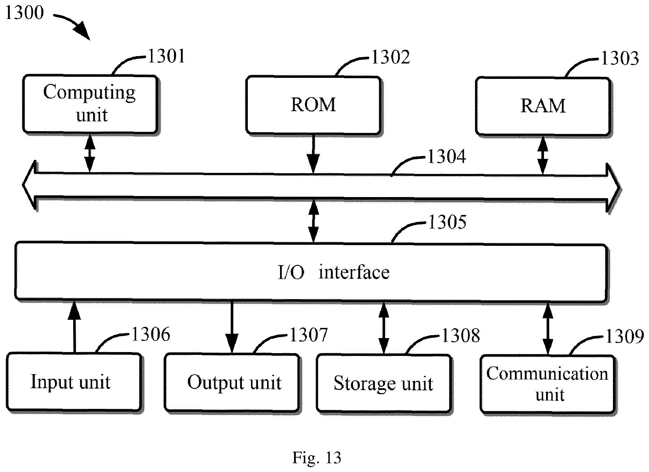

Referring to FIG. 13, a structural block diagram of an electronic device 1300 that can serve as a server or a client of the present disclosure is now described, which is an example of a hardware device that can be applied to various aspects of the present disclosure. The electronic device is intended to represent various forms of digital electronic computer devices, such as a laptop computer, a desktop computer, a workstation, a personal digital assistant, a server, a blade server, a mainframe computer, and other suitable computers. The electronic device may further represent various forms of mobile apparatuses, such as a personal digital assistant, a cellular phone, a smartphone, a wearable device, and other similar computing apparatuses. The components shown herein, their connections and relationships, and their functions are merely examples, and are not intended to limit the implementation of the present disclosure described and/or required herein.

As shown in FIG. 13, the device 1300 includes a computing unit 1301, which may perform various appropriate actions and processing according to a computer program stored in a read-only memory (ROM) 1302 or a computer program loaded from a storage unit 1308 to a random access memory (RAM) 1303. The RAM 1303 may further store various programs and data required for the operation of the device 1300. The computing unit 1301, the ROM 1302, and the RAM 1303 are connected to each other through a bus 1304. An input/output (I/O) interface 1305 is also connected to the bus 1304.

A plurality of components in the device 1300 are connected to the I/O interface 1305, including: an input unit 1306, an output unit 1307, the storage unit 1308, and a communication unit 1309. The input unit 1306 may be any type of device capable of entering information to the device 1300. The input unit 1306 can receive entered digit or character information, and generate a key signal input related to user settings and/or function control of the electronic device, and may include, but is not limited to, a mouse, a keyboard, a touchscreen, a trackpad, a trackball, a joystick, a microphone, and/or a remote controller. The output unit 1307 may be any type of device capable of presenting information, and may include, but is not limited to, a display, a speaker, a video/audio output terminal, a vibrator, and/or a printer. The storage unit 1308 may include, but is not limited to, a magnetic disk and an optical disc. The communication unit 1309 allows the device 1300 to exchange information/data with other devices via a computer network such as the Internet and/or various telecommunications networks, and may include, but is not limited to, a modem, a network interface card, an infrared communication device, a wireless communication transceiver and/or a chipset, e.g., a Bluetooth™ device, an 802.11 device, a Wi-Fi device, a WiMAX device, a cellular communication device, and/or the like.

The computing unit 1301 may be various general-purpose and/or special-purpose processing components with processing and computing capabilities. Some examples of the computing unit 1301 include, but are not limited to, a central processing unit (CPU), a graphics processing unit (GPU), various dedicated artificial intelligence (AI) computing chips, various computing units that run machine learning network algorithms, a digital signal processor (DSP), and any appropriate processor, controller, microcontroller, etc. The computing unit 1301 performs the various methods and processing described above, for example, the human-object interaction detection method and the training method for a neural network. For example, in some embodiments, the human-object interaction detection method and the training method for a neural network may be each implemented as a computer software program, which is tangibly contained in a machine-readable medium, such as the storage unit 1308. In some embodiments, a part or all of the computer program may be loaded and/or installed onto the device 1300 via the ROM 1302 and/or the communication unit 1309. When the computer program is loaded onto the RAM 1303 and executed by the computing unit 1301, one or more steps of the human-object interaction detection method and the training method for a neural network described above can be performed. Alternatively, in other embodiments, the computing unit 1301 may be configured, by any other suitable means (for example, by means of firmware), to perform the human-object interaction detection method and the training method for a neural network.

Various implementations of the systems and technologies described herein above can be implemented in a digital electronic circuit system, an integrated circuit system, a field programmable gate array (FPGA), an application-specific integrated circuit (ASIC), an application-specific standard product (ASSP), a system-on-chip (SOC) system, a complex programmable logical device (CPLD), computer hardware, firmware, software, and/or a combination thereof. These various implementations may include: The systems and technologies are implemented in one or more computer programs, where the one or more computer programs may be executed and/or interpreted on a programmable system including one or more programmable processors. The programmable processor may be a dedicated or general-purpose programmable processor that can receive data and instructions from a storage system, one or more input apparatuses, and one or more output apparatuses, and transmit data and instructions to the storage system, the one or more input apparatuses, and the one or more output apparatuses.

Program codes used to implement the method of the present disclosure can be written in any combination of one or more programming languages. These program codes may be provided for a processor or a controller of a general-purpose computer, a special-purpose computer, or other programmable data processing apparatuses, such that when the program codes are executed by the processor or the controller, the functions/operations specified in the flowcharts and/or block diagrams are implemented. The program codes may be completely executed on a machine, or partially executed on a machine, or may be, as an independent software package, partially executed on a machine and partially executed on a remote machine, or completely executed on a remote machine or a server.

In the context of the present disclosure, the machine-readable medium may be a tangible medium, which may contain or store a program for use by an instruction execution system, apparatus, or device, or for use in combination with the instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof.

In order to provide interaction with a user, the systems and technologies described herein can be implemented on a computer which has: a display apparatus (for example, a cathode-ray tube (CRT) or a liquid crystal display (LCD) monitor) configured to display information to the user; and a keyboard and a pointing apparatus (for example, a mouse or a trackball) through which the user can provide an input to the computer. Other types of apparatuses can also be used to provide interaction with the user; for example, feedback provided to the user can be any form of sensory feedback (for example, visual feedback, auditory feedback, or tactile feedback), and an input from the user can be received in any form (including an acoustic input, a voice input, or a tactile input).

The systems and technologies described herein can be implemented in a computing system (for example, as a data server) including a backend component, or a computing system (for example, an application server) including a middleware component, or a computing system (for example, a user computer with a graphical user interface or a web browser through which the user can interact with the implementation of the systems and technologies described herein) including a frontend component, or a computing system including any combination of the backend component, the middleware component, or the frontend component. The components of the system can be connected to each other through digital data communication (for example, a communications network) in any form or medium. Examples of the communications network include: a local area network (LAN), a wide area network (WAN), and the Internet.

A computer system may include a client and a server. The client and the server are generally far away from each other and usually interact through a communications network. A relationship between the client and the server is generated by computer programs running on respective computers and having a client-server relationship with each other. The server may be a cloud server, which is also referred to as a cloud computing server or a cloud host, and is a host product in a cloud computing service system for overcoming defects of difficult management and weak business expansion in conventional physical hosts and virtual private server (VPS) services. The server may alternatively be a server in a distributed system, or a server combined with a blockchain.

It should be understood that steps may be reordered, added, or deleted based on the various forms of procedures shown above. For example, the steps recorded in the present disclosure may be performed in parallel, in order, or in a different order, provided that the desired result of the technical solutions disclosed in the present disclosure can be achieved, which is not limited herein.

Although the embodiments or examples of the present disclosure have been described with reference to the accompanying drawings, it should be appreciated that the method, system, and device described above are merely exemplary embodiments or examples, and the scope of the present disclosure is not limited by the embodiments or examples, but defined only by the granted claims and the equivalent scope thereof. Various elements in the embodiments or examples may be omitted or substituted by equivalent elements thereof. Moreover, the steps may be performed in an order different from that described in the present disclosure. Further, various elements in the embodiments or examples may be combined in various ways. It is important that, as the technology evolves, many elements described herein may be replaced with equivalent elements that appear after the present disclosure.

**Claims**

1. A computer-implemented human-object interaction detection method, comprising:

    obtaining (S201) an image feature of an image to be detected;
    performing (S202) first target feature extraction on the image feature to obtain a plurality of first target features;
    performing (S203) first motion feature extraction on the image feature to obtain one or more first motion features;
    for each first target feature of the plurality of first target features, fusing (S204) the first target feature and at least some of the one or more first motion features to obtain a plurality of enhanced first target features;
    for each first motion feature of the one or more first motion features, fusing (S205) the first motion feature and at least some of the plurality of first target features to obtain one or more enhanced first motion features;
    processing (S206) the plurality of enhanced first target features to obtain target information of a plurality of targets in the image to be detected, wherein the plurality of targets comprise one or more human targets and one or more object targets;
    processing (S207) the one or more enhanced first motion features to obtain motion information of one or more motions in the image to be detected, wherein each motion of the one or more motions is associated with one of the one or more human targets, and one of the one or more object targets; and

matching (S208) the plurality of targets with the one or more motions to obtain a human-object interaction detection result.

2. The method according to claim 1, further comprising:

    performing first human sub-feature embedding on each first motion feature of the one or more first motion features to obtain a corresponding first motion-human sub-feature; and
    performing first object sub-feature embedding on each first motion feature of the one or more first motion features to obtain a corresponding first motion-object sub-feature,
    wherein for each first motion feature of the one or more first motion features, fusing the first motion feature and at least some of the plurality of first target features comprises:
    for each first motion feature of the one or more first motion features,

        determining a first at least one first target feature in the plurality of first target features based on the first motion-human sub-feature corresponding to the first motion feature;
        determining a second at least one first target feature in the plurality of first target features based on the first motion-object sub-feature corresponding to the first motion feature; and
        fusing the first motion feature, the first at least one first target feature, and the second at least one first target feature to obtain an enhanced first motion feature of the one or more enhanced first motion features.

3. The method according to claim 1, further comprising:

    performing first human sub-feature embedding on each first motion feature of the one or more first motion features to obtain a corresponding first motion-human sub-feature; and
    performing first object sub-feature embedding on each first motion feature of the one or more first motion features to obtain a corresponding first motion-object sub-feature,
    wherein for each first target feature of the one or more first target features, fusing the first target feature and at least some of the one or more first motion features comprises:
    for each first target feature of the one or more first target features,

        determining, based on the first target feature, at least one first motion-human sub-feature in a plurality of first motion-human sub-features corresponding to the plurality of first motion features;

determining, based on the first target feature, at least one first motion-object sub-feature in a plurality of first motion-object sub-features corresponding to the plurality of first motion features; and

fusing the first target feature, a first at least one first motion feature corresponding to the at least one first motion-human sub-feature, and a second at least one first motion feature corresponding to the at least one first motion-object sub-feature to obtain an enhanced first target feature of the plurality of enhanced first target features.

4.  The method according to claim 2, further comprising:

for each first target feature of the plurality of first target features, generating a first target-matching sub-feature corresponding to the first target feature,

wherein for each first motion feature of the one or more first motion features, determining the first at least one first target feature comprises:

for each first motion feature of the one or more first motion features,

determining, based on the first motion-human sub-feature corresponding to the first motion feature, a first at least one first target-matching sub-feature in a plurality of first target-matching sub-features corresponding to the plurality of first target features; and
determining at least one first target feature corresponding to the first at least one first target-matching sub-feature as the first at least one first target feature, and

wherein for each first motion feature of the one or more first motion features, determining a second at least one first target feature comprises:

for each first motion feature of the one or more first motion features,

determining, based on the first motion-object sub-feature corresponding to the first motion feature, a second at least one first target-matching sub-feature in the plurality of first target-matching sub-features corresponding to the plurality of first target features; and
determining at least one first target feature corresponding to the second at least one first target-matching sub-feature as the second at least one first target feature.

5.  The method according to claim 2, further comprising:

for each first target feature of the plurality of the first target features, generating a first target-matching sub-feature corresponding to the first target feature,

wherein for each first motion feature of the one or more first motion features, fusing the first target feature and at least some of the one or more first motion features comprises:

for each first motion feature of the one or more first motion features,

determining, based on the first target-matching sub-feature corresponding to the first target feature, at least one first motion-human sub-feature in a plurality of first motion-human sub-features corresponding to the plurality of first motion features;
determining, based on the first target-matching sub-feature corresponding to the first target feature, at least one first motion-object sub-feature in a plurality of first motion-object sub-features corresponding to the plurality of first motion features; and
fusing the first target feature, a third at least one first motion feature corresponding to the at least one first motion-human sub-feature, and a fourth at least one first motion feature corresponding to the at least one first motion-object sub-feature to obtain an enhanced first target feature of the plurality of enhanced first target features.

6.  The method according to claim 2, wherein for each first motion feature of the one or more first motion features, determining the first at least one first target feature in the plurality of first target features based on the first motion-human sub-feature corresponding to the first motion feature comprises:

for each first motion feature of the one or more first motion features, determining the first at least one first target feature based on a similarity between the corresponding first motion-human sub-feature and each first target feature of the plurality of first target features, and
wherein for each first motion feature of the one or more first motion features, determining the second at least one first target feature in the plurality of first target features based on the first motion-object sub-feature corresponding to the first motion feature comprises:
for each first motion feature of the one or more first motion features, determining the second at least one first target feature based on a similarity between the corresponding first motion-object sub-feature and each of the plurality of first target features.

7. The method according to claim 1, wherein for each first target feature of the plurality of first target features, fusing the first target feature and at least some of the one or more first motion features comprises:

for each first target feature of the plurality of first target features, fusing the first target feature and the at least some of the one or more first motion features based on a weight corresponding to the first target feature and a weight corresponding to each first motion feature of the at least some of the first motion features, and

wherein for each first motion feature of the one or more first motion features, fusing the first motion feature and at least some of the plurality of first target features comprises:

for each first motion feature of the one or more first motion features, fusing the first motion feature and the at least some of the plurality of first target features based on a weight corresponding to the first motion feature and a weight corresponding to each of the at least some of the first target features.

8. The method according to claim 1, wherein for each first motion feature of the one or more first motion features, fusing the first motion feature and at least some of the plurality of first target features comprises:

for each first motion feature of the one or more first motion features, fusing the first motion feature and at least some of the plurality of enhanced first target features after the plurality of enhanced first target features are obtained, and optionally,

wherein for each first target feature of the plurality of first target features, fusing the first target feature and at least some of the one or more first motion features comprises:

for each first target feature of the plurality of first target features, fusing the first target feature and at least some of the one or more enhanced first motion features after the one or more enhanced first motion features are obtained.

9. The method according to claim 1, further comprising:

performing second target feature extraction on the plurality of enhanced first target features to obtain a plurality of second target features; performing second motion feature extraction on the one or more enhanced first motion features to obtain one or more second motion features; for each second target feature of the plurality of second target features, fusing the second target feature and at least some of the one or more second motion features to obtain a plurality of enhanced second target features; and for each second motion feature of the one or more second motion features, fusing the second motion feature and at least some of the plurality of second target features to obtain one or more enhanced second motion features, wherein the processing of the plurality of enhanced first target features to obtain target information of a plurality of targets in the image to be detected comprises:

processing the plurality of enhanced second target features to obtain the target information of a plurality of targets in the image to be detected, and wherein the processing the one or more enhanced first motion features to obtain motion information of one or more motions in the image to be detected comprises: processing the one or more enhanced second motion features to obtain the motion information of one or more motions in the image to be detected.

10. The method according to claim 1, wherein the image feature comprises a plurality of image-key features and a plurality of image-value features corresponding to the plurality of image-key features, wherein the performing of the first motion feature extraction on the image feature to obtain one or more first motion features comprises:

obtaining one or more pre-trained motion-query features; and for each pre-trained motion-query feature of the one or more pre-trained motion-query features, determining a first motion feature corresponding to the motion-query feature based on a query result of the motion-query feature for the plurality of image-key features and based on the plurality of image-value features, and optionally, wherein the performing of the first target feature extraction on the image feature to obtain a plurality of first target features comprises:

obtaining a plurality of pre-trained target-query features; and for each pre-trained target-query features of the plurality of pre-trained target-query features, determining a first target feature corresponding to the target-query feature based on a query result of the target-query feature for the plurality of image-key features and based on the plurality of image-value features.

11. The method according to claim 1, wherein the target information comprises a type of a corresponding target, a bounding box surrounding the corresponding target, and a confidence level, and optionally, each motion of the one or more motions comprises at least one sub-motion between a corresponding human target and a corresponding object target, and wherein the motion information comprises a type and a confidence level of each sub-motion of the at least one sub-motion.

12. A computer-implemented method for training a neural network for human-object interaction detection, wherein the neural network comprises an image feature extraction sub-network, a first target feature extraction sub-network, a first motion feature extraction sub-network, a first target feature enhancement sub-network, a first motion feature enhancement sub-network, a target detection sub-network, a motion recognition sub-network, and a human-object interaction detection sub-network, and the method comprises:

obtaining (S701) a sample image and a ground truth human-object interaction label of the sample image;
inputting (S702) the sample image to the image feature extraction sub-network to obtain a sample image feature;
inputting (S703) the sample image feature to the first target feature extraction sub-network to obtain a plurality of first target features;
inputting (S704) the sample image feature to the first motion feature extraction sub-network to obtain one or more first motion features;
inputting (S705) the plurality of first target features and the one or more first motion features to the first target feature enhancement sub-network, wherein the first target feature enhancement sub-network is configured to: for each first target feature of the plurality of first target features, fuse the first target feature and at least some of the one or more first motion features to obtain a plurality of enhanced first target features;
inputting (S706) the plurality of first target features and the one or more first motion features to the first motion feature enhancement sub-network, wherein the first motion feature enhancement sub-network is configured to: for each first motion feature of the one or more first motion features, fuse the first motion feature and at least some of the plurality of first target features to obtain one or more enhanced first motion features;
inputting (S707) the plurality of enhanced first target features to the target detection sub-network, wherein the target detection sub-network is configured to receive the plurality of enhanced first target features to output target information of a plurality of predicted targets in the sample image, wherein the plurality of predicted targets comprise one or more predicted human targets and one or more predicted object targets;
inputting (S708) the one or more enhanced first motion features to the motion recognition sub-network, wherein the motion recognition sub-network is configured to receive the one or more enhanced first motion features to output motion information of one or more predicted motions in the sample image, wherein each predicted motion of the one or more predicted motions is associated with one of the one or more predicted human targets, and one of the one or more predicted object targets;
inputting (S709) the plurality of predicted targets and the one or more predicted motions to the human-object interaction detection sub-network to obtain a predicted human-object interaction label;
calculating (S710) a loss value based on the predicted human-object interaction label and the ground truth human-object interaction label; and
adjusting (S711) a parameter of the neural network based on the loss value.

13. A neural network for human-object interaction detection, the neural network (1000) comprising:

an image feature extraction sub-network (1001) configured to receive an image (1009) to be detected to output an image feature of the image to be detected;
a first target feature extraction sub-network (1002) configured to receive the image feature to output a plurality of first target features;
a first motion feature extraction sub-network (1003) configured to receive the image feature to output one or more first motion features;
a first target feature enhancement sub-network (1004) configured to: for each first target feature of the plurality of received first target features, fuse the first target feature and at least some of the one or more received first motion features to output a plurality of enhanced first target features;
a first motion feature enhancement sub-network (1005) configured to: for each first motion feature of the one or more received first motion features, fuse the first motion feature and at least some of the plurality of received first target features to output one or more enhanced first motion features;

a target detection sub-network (1006) configured to receive the plurality of enhanced first target features to output target information of a plurality of targets in the image to be detected, wherein the plurality of targets comprise one or more human targets and one or more object targets;

a motion recognition sub-network (1007) configured to receive the one or more enhanced first motion features to output motion information of one or more motions in the image to be detected, wherein each motion of the one or more motions is associated with one of the one or more human targets, and one of the one or more object targets; and

a human-object interaction detection sub-network (1008) configured to match the plurality of received targets with the one or more motions to output a human-object interaction detection result (1010).

14. A computer-readable storage medium storing computer instructions, wherein the computer instructions are used to cause a computer to perform the method according to any one of claims 1 to 12.

15. A computer program product, comprising a computer program, wherein when the computer program is executed by a processor, the method according to any one of claims 1 to 12 is implemented.

Fig. 1

200

| Obtain an image feature of an image to be detected | S201 |

↓

| Perform first target feature extraction on the image feature to obtain a plurality of first target features | S202 |

↓

| Perform first motion feature extraction on the image feature to obtain one or more first motion features | S203 |

↓

| For each of the plurality of first target features, fuse the first target feature and at least some of the one or more first motion features to obtain a plurality of enhanced first target features | S204 |

↓

| For each of the one or more first motion features, fuse the first motion feature and at least some of the plurality of first target features to obtain one or more enhanced first motion features | S205 |

↓

| Process the plurality of enhanced first target features to obtain target information of a plurality of targets in the image to be detected | S206 |

↓

| Process the one or more enhanced first motion features to obtain motion information of one or more motions in the image to be detected | S207 |

↓

| Match the plurality of targets with the one or more motions to obtain a human-object interaction detection result | S208 |

Fig. 2

300

```
┌─────────────────────────────────────────────────────┐
│  Obtain an image feature of an image to be detected   │  S301
└─────────────────────────────────────────────────────┘
                          │
                          ▼
┌─────────────────────────────────────────────────────┐
│  Perform first target feature extraction on the image │  S302
│  feature to obtain a plurality of first target features│
└─────────────────────────────────────────────────────┘
                          │
                          ▼
┌─────────────────────────────────────────────────────┐
│  Perform first motion feature extraction on the image │  S303
│  feature to obtain one or more first motion features  │
└─────────────────────────────────────────────────────┘
                          │
                          ▼
┌─────────────────────────────────────────────────────┐
│ Perform first human sub-feature embedding on each of the│ S304
│ one or more first motion features to obtain a          │
│ corresponding first motion-human sub-feature           │
└─────────────────────────────────────────────────────┘
                          │
                          ▼
┌─────────────────────────────────────────────────────┐
│ Perform first object sub-feature embedding on each of the│ S305
│ one or more first motion features to obtain a          │
│ corresponding first motion-object sub-feature          │
└─────────────────────────────────────────────────────┘
                          │
                          ▼
┌─────────────────────────────────────────────────────┐
│ For each first target feature, generate a first        │ S306
│ target-matching sub-feature corresponding to the first │
│ target feature                                         │
└─────────────────────────────────────────────────────┘
                          │
                          ▼
┌─────────────────────────────────────────────────────┐
│ For each of the plurality of first target features, fuse│ S307
│ the first target feature and at least some of the one or│
│ more first motion features to obtain a plurality of     │
│ enhanced first target features                          │
└─────────────────────────────────────────────────────┘
                          │
                          ▼
┌─────────────────────────────────────────────────────┐
│ For each of the one or more first motion features, fuse │ S308
│ the first motion feature and at least some of the       │
│ plurality of first target features to obtain one or more │
│ enhanced first motion features                          │
└─────────────────────────────────────────────────────┘
                          │
                          ▼
┌─────────────────────────────────────────────────────┐
│ Process the plurality of enhanced first target features │ S309
│ to obtain target information of a plurality of targets  │
│ in the image to be detected                             │
└─────────────────────────────────────────────────────┘
                          │
                          ▼
┌─────────────────────────────────────────────────────┐
│ Process the one or more enhanced first motion features │ S310
│ to obtain motion information of one or more motions in  │
│ the image to be detected                                │
└─────────────────────────────────────────────────────┘
                          │
                          ▼
┌─────────────────────────────────────────────────────┐
│ Match the plurality of targets with the one or more    │ S311
│ motions to obtain a human-object interaction detection │
│ result                                                  │
└─────────────────────────────────────────────────────┘
```

Fig. 3

400

Determine a first at least one first target feature in a plurality of first target features based on a first motion-human sub-feature corresponding to a first motion feature — S401

Determine a second at least one first target feature in the plurality of first target features based on a first motion-object sub-feature corresponding to the first motion feature — S402

Fuse the first motion feature, the first at least one first target feature, and the second at least one first target feature to obtain an enhanced first motion feature — S403

Fig. 4

500

Determine, based on a first target-matching sub-feature corresponding to a first target feature, at least one first motion-human sub-feature in a plurality of first motion-human sub-features corresponding to a plurality of first motion features — S501

Determine, based on the first target-matching sub-feature corresponding to the first target feature, at least one first motion-object sub-feature in a plurality of first motion-object sub-features corresponding to the plurality of first motion features — S502

Fuse the first target feature, a third at least one first motion feature corresponding to the at least one first motion-human sub-feature, and a fourth at least one first motion feature corresponding to the at least one first motion-object sub-feature to obtain an enhanced first target feature — S503

Fig. 5

600

```
┌─────────────────────────────────────────────────────────┐     S601
│      Obtain an image feature of an image to be detected   │ ↝
└─────────────────────────────────────────────────────────┘
                              ↓
┌─────────────────────────────────────────────────────────┐     S602
│   Perform first target feature extraction on the image    │ ↝
│   feature to obtain a plurality of first target features  │
└─────────────────────────────────────────────────────────┘
                              ↓
┌─────────────────────────────────────────────────────────┐     S603
│      Perform first motion feature extraction on the image │ ↝
│    feature to obtain one or more first motion features    │
└─────────────────────────────────────────────────────────┘
                              ↓
┌─────────────────────────────────────────────────────────┐     S604
│  For each of the plurality of first target features, fuse the first │ ↝
│  target feature and at least some of the one or more first motion   │
│  features to obtain a plurality of enhanced first target features   │
└─────────────────────────────────────────────────────────┘
                              ↓
┌─────────────────────────────────────────────────────────┐     S605
│  For each of the one or more first motion features, fuse the first │ ↝
│  motion feature and at least some of the plurality of first target │
│  features to obtain one or more enhanced first motion features     │
└─────────────────────────────────────────────────────────┘
                              ↓
┌─────────────────────────────────────────────────────────┐     S606
│  Perform second target feature extraction on the plurality of enhanced │ ↝
│  first target features to obtain a plurality of second target features │
└─────────────────────────────────────────────────────────┘
                              ↓
┌─────────────────────────────────────────────────────────┐     S607
│  Perform second motion feature extraction on the one or more enhanced │ ↝
│  first motion features to obtain one or more second motion features   │
└─────────────────────────────────────────────────────────┘
                              ↓
┌─────────────────────────────────────────────────────────┐     S608
│  For each of the plurality of second target features, fuse the second │ ↝
│  target feature and at least some of the one or more second motion    │
│  features to obtain a plurality of enhanced second target features    │
└─────────────────────────────────────────────────────────┘
                              ↓
┌─────────────────────────────────────────────────────────┐     S609
│  For each of the one or more second motion features, fuse the first │ ↝
│  motion feature and at least some of the plurality of second target │
│  features to obtain one or more enhanced second motion features     │
└─────────────────────────────────────────────────────────┘
                              ↓
┌─────────────────────────────────────────────────────────┐     S610
│  Process the plurality of enhanced second target features to obtain │ ↝
│  target information of a plurality of targets in the image to be detected │
└─────────────────────────────────────────────────────────┘
                              ↓
┌─────────────────────────────────────────────────────────┐     S611
│  Process the one or more enhanced second motion features to obtain │ ↝
│  motion information of one or more motions in the image to be detected │
└─────────────────────────────────────────────────────────┘
                              ↓
┌─────────────────────────────────────────────────────────┐     S612
│  Match the plurality of targets with the one or more motions │ ↝
│   to obtain a human-object interaction detection result      │
└─────────────────────────────────────────────────────────┘
```

Fig. 6

700

```
┌─────────────────────────────────────────────────────────┐
│  Obtain a sample image and a real human-object interaction │  S701
│              label of the sample image                     │
└─────────────────────────────────────────────────────────┘
                          │
                          ▼
┌─────────────────────────────────────────────────────────┐
│ Input the sample image to an image feature extraction sub-network │  S702
│              to obtain a sample image feature              │
└─────────────────────────────────────────────────────────┘
                          │
                          ▼
┌─────────────────────────────────────────────────────────┐
│  Input the sample image feature to a first target feature extraction │  S703
│    sub-network to obtain a plurality of first target features │
└─────────────────────────────────────────────────────────┘
                          │
                          ▼
┌─────────────────────────────────────────────────────────┐
│  Input the sample image feature to a first motion feature extraction │  S704
│     sub-network to obtain one or more first motion features │
└─────────────────────────────────────────────────────────┘
                          │
                          ▼
┌─────────────────────────────────────────────────────────┐
│  Input the plurality of first target features and the one or more first │  S705
│  motion features to a first target feature enhancement sub-network │
└─────────────────────────────────────────────────────────┘
                          │
                          ▼
┌─────────────────────────────────────────────────────────┐
│  Input the plurality of first target features and the one or more first │  S706
│  motion features to a first motion feature enhancement sub-network │
└─────────────────────────────────────────────────────────┘
                          │
                          ▼
┌─────────────────────────────────────────────────────────┐
│     Input a plurality of enhanced first target features to a │  S707
│              target detection sub-network                  │
└─────────────────────────────────────────────────────────┘
                          │
                          ▼
┌─────────────────────────────────────────────────────────┐
│     Input one or more enhanced first motion features to a  │  S708
│              motion recognition sub-network               │
└─────────────────────────────────────────────────────────┘
                          │
                          ▼
┌─────────────────────────────────────────────────────────┐
│  Input a plurality of predicted targets and one or more predicted motions to a │  S709
│  human-object interaction detection sub-network to obtain a predicted │
│              human-object interaction label               │
└─────────────────────────────────────────────────────────┘
                          │
                          ▼
┌─────────────────────────────────────────────────────────┐
│   Calculate a loss value based on the predicted human-object │  S710
│  interaction label and the real human-object interaction label │
└─────────────────────────────────────────────────────────┘
                          │
                          ▼
┌─────────────────────────────────────────────────────────┐
│  Adjust a parameter of a neural network based on the loss value │  S711
└─────────────────────────────────────────────────────────┘
```

Fig. 7

800

| | |
|---|---|
| Obtain a sample image and a real human-object interaction label of the sample image | S801 |
| Input the sample image to an image feature extraction sub-network to obtain a sample image feature | S802 |
| Input the sample image feature to a first target feature extraction sub-network to obtain a plurality of first target features | S803 |
| Input the sample image feature to a first motion feature extraction sub-network to obtain one or more first motion features | S804 |
| Input each of the one or more first motion features to a first human sub-feature embedding sub-network | S805 |
| Input each of the one or more first motion features to a first object sub-feature embedding sub-network | S806 |
| Input each of the plurality of first target features to a first target feature embedding sub-network | S807 |
| Input the plurality of first target features and the one or more first motion features to a first target feature enhancement sub-network | S808 |
| Input the plurality of first target features and the one or more first motion features to a first motion feature enhancement sub-network | S809 |
| Input a plurality of enhanced first target features to a target detection sub-network | S810 |
| Input one or more enhanced first motion features to a motion recognition sub-network | S811 |
| Input a plurality of predicted targets and one or more predicted motions to a human-object interaction detection sub-network to obtain a predicted human-object interaction label | S812 |
| Calculate a loss value based on the predicted human-object interaction label and the real human-object interaction label | S813 |
| Adjust a parameter of a neural network based on the loss value | S814 |

Fig. 8

900

| | |
|---|---|
| Obtain a sample image and a real human-object interaction label of the sample image | S901 |
| Input the sample image to an image feature extraction sub-network to obtain a sample image feature | S902 |
| Input the sample image feature to a first target feature extraction sub-network to obtain a plurality of first target features | S903 |
| Input the sample image feature to a first motion feature extraction sub-network to obtain one or more first motion features | S904 |
| Input the plurality of first target features and the one or more first motion features to a first target feature enhancement sub-network | S905 |
| Input the plurality of first target features and the one or more first motion features to a first motion feature enhancement sub-network | S906 |
| Input a plurality of enhanced first target features to a second target feature extraction sub-network to obtain a plurality of second target features | S907 |
| Input one or more enhanced first motion features to a second motion feature extraction sub-network to obtain one or more second motion features | S908 |
| Input the plurality of second target features and the one or more second motion features to a second target feature enhancement sub-network | S909 |
| Input the plurality of second target features and the one or more second motion features to a second motion feature enhancement sub-network | S910 |
| Input a plurality of enhanced second target features to a target detection sub-network | S911 |
| Input one or more enhanced second motion features to a motion recognition sub-network | S912 |
| Input a plurality of predicted targets and one or more predicted motions to a human-object interaction detection sub-network to obtain a predicted human-object interaction label | S913 |
| Calculate a loss value based on the predicted human-object interaction label and the real human-object interaction label | S914 |
| Adjust a parameter of a neural network based on the loss value | S915 |

Fig. 9

Fig. 10

Fig. 11

Fig. 12

1300

1301
Computing
unit

1302
ROM

1303
RAM

1304

1305
I/O    interface

1306
Input unit

1307
Output unit

1308
Storage unit

1309
Communication
unit

Fig. 13